# EUROPEAN PATENT APPLICATION

(11) **EP 4 773 668 A1**
(43) Date of publication of application: **08.07.2026**
(21) Application number: 24858547.3
(22) Date of filing: 27.08.2024
(51) Int. Cl.: H04W 36/00

(54) **METHOD AND APPARATUS USED IN COMMUNICATION NODE FOR WIRELESS COMMUNICATION**

(30) Priority: 30.08.2023 CN 202311111132
(71) Applicant: Apogee 5G Global, LLC, Plano, TX 75024 (US)
(72) Inventor: YU, Qiaoling, Shanghai 201206 (CN); XIA, Shushu, Shanghai 201206 (CN); ZHANG, Xiaobo, Shanghai 201206 (CN)
(74) Representative: Gunzelmann, Rainer
(86) International application number: PCT/CN2024/114677
(87) International publication number: WO 2025/045011

(57) **Abstract**

Disclosed in the present application are a method and apparatus used in a communication node for wireless communication. The method comprises: a communication node receiving a first message, wherein the first message comprises configuration information of a first cell; sending second signaling; receiving first signaling, wherein the first signaling is signaling of a protocol layer under an RRC sub-layer, and the first signaling indicates the first cell; in response to the first signaling being received, applying the configuration information of the first cell; in response to the configuration information of the first cell being not successfully applied, setting a first information block in a first UE variable, wherein the first information block is used for indicating information about a wireless connection failure, a first domain in the first information block is set, the first domain indicates the identity of the first cell, a second domain in the first information block is set, the second domain indicates a first time interval, and the first time interval depends on at least one piece of the second signaling and the first signaling.

## Description

### Technical Field

The present application relates to a transmission method and apparatus in a wireless communication system, in particular to a storage method and apparatus for connection failure information.

### Background Art

With continuous development of wireless communication, the requirements for mobility, transmission delay and system capacity are becoming increasingly high. In addition to continuous improvements based on existing L3 mobility, the 3GPP (the 3rd Generation Partnership Project) RAN (Radio Access Network) #94e meeting decided to study L1 (Layer 1)/L2 (Layer 2) triggered mobility (LTM) in the "Further NR (New Radio) mobility enhancements" work item (WI).

Self-Organising Networks (SON) comprise network self-configuration and self-optimization. To optimize mobility performance and achieve fast handover, an existing protocol supports storing relevant handover information during handover by user equipment (UE), and reporting relevant stored information after a handover failure based on base station scheduling.

A handover-related storage mechanism of the existing protocol does not consider time storage after the UE sends one piece of signaling, which makes information about a handover failure (HOF) reported by the UE according to the existing protocol not facilitate network self-configuration and self-optimization.

### Summary of the Invention

In a traditional solution, when the UE executes a handover procedure, the information about the HOF stored according to the existing protocol is unrelated to sending of one piece of signaling or reception of one piece of L1/L2 signaling, which does not facilitate optimization of mobility. When the UE executes the handover procedure and handover fails, how the UE stores the information about the handover failure for reporting needs to be studied.

In response to the above problems, the present application provides a solution. In the description of the above problems, an NR system is used as one example. The present application is also applicable to scenarios such as an LTE (Long-Term Evolution) system or an LTE-A (Long-Term Evolution Advanced) system to achieve technical effects similar to those of the NR system; and further, although the present application provides specific implementations for mobility of an RRC _CONNECTED state involved in the handover, the present application can also be used in scenarios such as an RRC_IDLE state or an RRC_INACTIVE state, achieving technical effects similar to the mobility of an RRC connected state. Further, the use of a unified solution for different scenarios also helps to reduce hardware complexity and cost. Further, although the original intention of the present application is for a Uu air interface, the present application can also be used for a PC5 interface to achieve technical effects similar to those of the Uu air interface. Further, although the original intention of the present application is for a terminal and base station scenario, the present application is also applicable to a V2X (Vehicle-to-Everything) scenario, and communication scenarios between the terminal and a relay and between the relay and a base station to achieve technical effects similar to those in the terminal and base station scenario. Further, although the original intention of the present application is for a terminal and base station scenario, the present application is also applicable to a communication scenario of an IAB (Integrated Access and Backhaul) to achieve technical effects similar to those in the terminal and base station scenario. Further, although the original intention of the present application is for a terrestrial network (TN) scenario, the present application is also applicable to a communication scenario of a non-terrestrial network (NTN) to achieve technical effects similar to those in the TN scenario. In addition, the use of a unified solution for different scenarios also helps to reduce hardware complexity and costs.

As one embodiment, interpretations of terminologies in the present application refer to definitions in the specification protocol TS38 series of 3GPP.

As one embodiment, the interpretations of the terminologies in the present application refer to the definitions in the specification protocol TS37 series of 3GPP.

It should be noted that, in the absence of conflicts, embodiments and features in the embodiments in any node of the present application may be applied to any other node. In the absence of conflicts, the embodiments and the features in the embodiments of the present application may be arbitrarily combined with each other.

The present application discloses a method used in a first node for wireless communication, characterized by comprising:
receiving a first message, wherein the first message comprises configuration information of a first cell; sending second signaling; receiving first signaling, wherein the first signaling is signaling of a protocol layer under an RRC sub-layer, and the first signaling indicates the first cell; in response to the first signaling being received, applying the configuration information of the first cell; and in response to the configuration information of the first cell being not successfully applied, setting a first information block in a first UE variable, wherein the first information block is used for indicating information about a wireless connection failure;
wherein a first field in the first information block is set, and the first field in the first information block indicates an identity of the first cell; and a second field in the first information block is set, the second field in the first information block indicates a first time interval, and the first time interval depends on at least one of the second signaling or the first signaling.

As one embodiment, the problem to be solved by the present application comprises: in response to the configuration information of the first cell being not successfully applied, how to set the first UE variable.

As one embodiment, the problem to be solved by the present application comprises: if applying the configuration information of the first cell is triggered by the signaling of the protocol layer under one RRC sub-layer indicating the first cell, how to indicate information about the configuration information of the first cell being not successfully applied.

As one embodiment, the problem to be solved by the present application comprises: how to optimize mobility of UE.

As one embodiment, characteristics of the above method comprise: if the configuration information of the first cell is not successfully applied, the second field in the first information block is set, the second field in the first information block indicates the first time interval, and the first time interval depends on the second signaling.

As one embodiment, the characteristics of the above method comprise: if the configuration information of the first cell is not successfully applied, the second field in the first information block is set, the second field in the first information block indicates the first time interval, and the first time interval depends on the first signaling.

As one embodiment, the characteristics of the above method comprise: if the configuration information of the first cell is not successfully applied, the second field in the first information block is set, the second field in the first information block indicates the first time interval, and the first time interval depends on the second signaling and the first signaling.

As one embodiment, benefits of the above method comprise: facilitating self-configuration and self-optimization for a wireless connection failure.

As one embodiment, the benefits of the above method comprise: simple implementation.

As one embodiment, the benefits of the above method comprise: facilitating optimizing mobility between cells.

As one embodiment, the benefits of the above method comprise: facilitating shortening handover delay of inter-cell mobility.

As one embodiment, the benefits of the above method comprise: facilitating network self-configuration and self-optimization.

According to one aspect of the present application, it is characterized in that the first time interval depends on a moment at which the configuration information of the first cell being not successfully applied is determined.

As one embodiment, the benefits of the above method comprise: facilitating acquiring, by a base station, the moment at which the configuration information of the first cell being not successfully applied is determined.

According to one aspect of the present application, it is characterized in that a third field in the first information block is set, the third field in the first information block indicates a second time interval, and the second time interval depends on the first signaling; and the first time interval depends on the second signaling.

As one embodiment, the benefits of the above method comprise: facilitating acquiring, by the base station, second time interval information.

As one embodiment, the benefits of the above method comprise: facilitating acquiring, by the base station, first time interval information.

As one embodiment, the benefits of the above method comprise: facilitating acquiring, by the base station, both the first time interval information and the second time interval information simultaneously.

According to one aspect of the present application, it is characterized in that the second time interval depends on the moment at which the configuration information of the first cell being not successfully applied is determined.

As one embodiment, the benefits of the above method comprise: facilitating acquiring, by the base station, the moment at which the configuration information of the first cell being not successfully applied is determined.

As one embodiment, the benefits of the above method comprise: facilitating acquiring, by the base station, a moment of a handover failure.

According to one aspect of the present application, it is characterized in that the first time interval depends on a sending moment of the second signaling.

As one embodiment, the benefits of the above method comprise: facilitating acquiring, by the base station, the sending moment of the second signaling.

According to one aspect of the present application, it is characterized in that the first time interval depends on a moment at which content in the second signaling is determined.

As one embodiment, the benefits of the above method comprise: facilitating acquiring, by the base station, the moment at which the content in the second signaling is determined.

According to one aspect of the present application, it is characterized in that the second signaling comprises a measurement result of the first cell; the second signaling is the signaling of the protocol layer under the RRC sub-layer; and the sending moment of the second signaling is earlier than a receiving moment of the first signaling.

As one embodiment, the benefits of the above method comprise: facilitating obtaining the content in the second signaling earlier.

As one embodiment, the benefits of the above method comprise: facilitating reducing delay of mobility.

According to one aspect of the present application, it is characterized by comprising:
receiving a second message, wherein the second message comprises a first request indication; and
in response to the second message being received, sending a third message;
wherein the third message comprises the first information block in the first UE variable; and the third message comprises the first information block in the first UE variable depending on the first request indication.

The present application discloses a method used in a second node for wireless communication, characterized by comprising:
sending a second message, wherein the second message comprises a first request indication; and
in response to the second message being sent, receiving a third message;
wherein the third message comprises a first information block in a first UE variable; the third message comprises the first information block in the first UE variable depending on the first request indication; a recipient of the second message receives a first message, wherein the first message comprises configuration information of a first cell; the recipient of the second message sends second signaling; the recipient of the second message receives first signaling, wherein the first signaling is signaling of a protocol layer under an RRC sub-layer, and the first signaling indicates the first cell; in response to the first signaling being received, the recipient of the second message applies the configuration information of the first cell; in response to the configuration information of the first cell being not successfully applied, the recipient of the second message sets the first information block in the first UE variable, wherein the first information block is used for indicating information about a wireless connection failure; a first field in the first information block is set, and the first field in the first information block indicates an identity of the first cell; and a second field in the first information block is set, the second field in the first information block indicates a first time interval, and the first time interval depends on at least one of the second signaling or the first signaling.

According to one aspect of the present application, it is characterized in that the first time interval depends on a moment at which the configuration information of the first cell being not successfully applied is determined.

According to one aspect of the present application, it is characterized in that a third field in the first information block is set, the third field in the first information block indicates a second time interval, and the second time interval depends on the first signaling; and the first time interval depends on the second signaling.

According to one aspect of the present application, it is characterized in that the second time interval depends on the moment at which the configuration information of the first cell being not successfully applied is determined.

According to one aspect of the present application, it is characterized in that the first time interval depends on a sending moment of the second signaling.

According to one aspect of the present application, it is characterized in that the first time interval depends on a moment at which content in the second signaling is determined.

According to one aspect of the present application, it is characterized in that the second signaling comprises a measurement result of the first cell; the second signaling is the signaling of the protocol layer under the RRC sub-layer; and the sending moment of the second signaling is earlier than a receiving moment of the first signaling.

The present application discloses a first node for wireless communication, characterized by comprising:
a first processing unit receiving a first message, wherein the first message comprises configuration information of a first cell; sending second signaling; receiving first signaling, wherein the first signaling is signaling of a protocol layer under an RRC sub-layer, and the first signaling indicates the first cell; in response to the first signaling being received, applying the configuration information of the first cell; and in response to the configuration information of the first cell being not successfully applied, setting a first information block in a first UE variable, wherein the first information block is used for indicating information about a wireless connection failure;
wherein a first field in the first information block is set, and the first field in the first information block indicates an identity of the first cell; and a second field in the first information block is set, the second field in the first information block indicates a first time interval, and the first time interval depends on at least one of the second signaling or the first signaling.

The present application discloses a second node for wireless communication, characterized by comprising:
a second transmitter sending a second message, wherein the second message comprises a first request indication; and
a second receiver, in response to the second message being sent, receiving a third message;
wherein the third message comprises a first information block in a first UE variable; the third message comprises the first information block in the first UE variable depending on the first request indication; a recipient of the second message receives a first message, wherein the first message comprises configuration information of a first cell; the recipient of the second message sends second signaling; the recipient of the second message receives first signaling, wherein the first signaling is signaling of a protocol layer under an RRC sub-layer, and the first signaling indicates the first cell; in response to the first signaling being received, the recipient of the second message applies the configuration information of the first cell; in response to the configuration information of the first cell being not successfully applied, the recipient of the second message sets the first information block in the first UE variable, wherein the first information block is used for indicating information about a wireless connection failure;a first field in the first information block is set, and the first field in the first information block indicates an identity of the first cell; a second field in the first information block is set, the second field in the first information block indicates a first time interval, and the first time interval depends on at least one of the second signaling or the first signaling.

As one embodiment, compared with the traditional solution, the present application has the following advantages:
- . facilitating self-configuration and self-optimization for handover;
- . facilitating reducing delay of cell handover;
- . facilitating improving the probability of successful handover;
- . simple implementation;
- . facilitating improving the reliability of cell handover; and
- . facilitating network self-configuration and self-optimization.

### Brief Description of the Drawings

Other features, purposes and advantages of the present application will become more apparent by reading the detailed description of the non-limiting embodiments in the following drawings with reference to them:
FIG. 1 shows a flowchart of communication of a first node according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a schematic diagram illustrating that a first time interval depends on a moment at which configuration information of a first cell being not successfully applied is determined according to one embodiment of the present application;
FIG. 7 shows a schematic diagram illustrating that a second time interval depends on first signaling and a first time interval depends on second signaling according to one embodiment of the present application;
FIG. 8 shows a schematic diagram illustrating that a second time interval depends on a moment at which configuration information of a first cell being not successfully applied is determined according to one embodiment of the present application;
FIG. 9 shows a schematic diagram illustrating that a first time interval depends on a sending moment of second signaling according to one embodiment of the present application;
FIG. 10 shows a schematic diagram illustrating that a first time interval depends on a moment at which content in second signaling is determined according to one embodiment of the present application;
FIG. 11 shows a schematic diagram illustrating that a sending moment of second signaling is earlier than a receiving moment of first signaling according to one embodiment of the present application;
FIG. 12 shows a structural block diagram of a processing apparatus used in a first node according to one embodiment of the present application; and
FIG. 13 shows a structural block diagram of a processing apparatus used in a second node according to one embodiment of the present application.

### Detailed Description of Embodiments

The technical solutions of the present application will be further described in detail below with reference to the drawings. It should be noted that, in the absence of conflicts, embodiments and features in the embodiments of the present application may be arbitrarily combined with each other.

### Embodiment 1

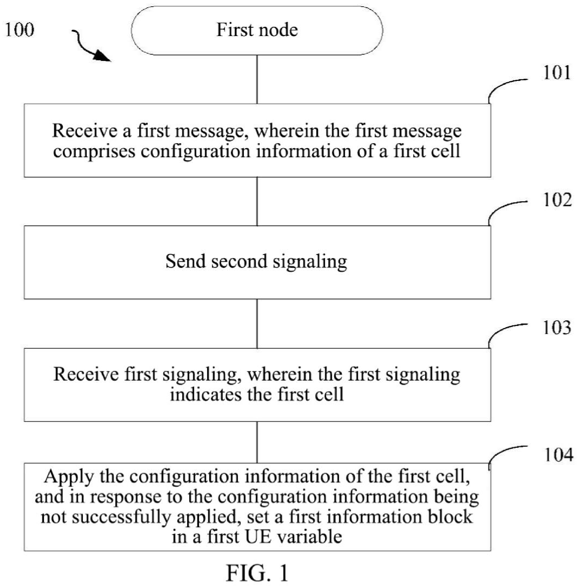

Embodiment 1 illustrates a flowchart of communication of a first node according to one embodiment of the present application, as shown in FIG. 1. In FIG. 1, each block represents one step. It is particularly needed to emphasize that the order of various blocks in the figure does not represent the temporal relationship between the steps represented.

In Embodiment 1, the first node in the present application receives a first message in step 101, wherein the first message comprises configuration information of a first cell;sends second signaling in step 102; receives first signaling in step 103, wherein the first signaling is signaling of a protocol layer under an RRC sub-layer, and the first signaling indicates the first cell; and applies the configuration information of the first cell, and in response to the configuration information being not successfully applied, sets a first information block in a first UE variable in step 104, wherein the first information block is used for indicating information about a wireless connection failure, wherein a first field in the first information block is set, and the first field in the first information block indicates an identity of the first cell; a second field in the first information block is set, the second field in the first information block indicates a first time interval, and the first time interval depends on at least one of the second signaling or the first signaling.

As one embodiment, the first message comprises at least one RRC (Radio Resource Control) message.

As one embodiment, the first message comprises one RRC message.

As one embodiment, the first message is one RRC IE (Information Element).

As one embodiment, the first message is UE-Specific.

As one embodiment, the first message is one cell common RRC message.

As one embodiment, the first message comprises at least one DCI (Downlink Control Information) message.

As one embodiment, the first message is transmitted through a DCCH (Dedicated Control Channel).

As one embodiment, the first message is transmitted through an SCCH (Sidelink Control Channel).

As one embodiment, the first message is transmitted through a BCCH (Broadcast Control Channel).

As one embodiment, the first message is transmitted through an SRB1 (Signalling Radio Bearer 1).

As one embodiment, the first message is transmitted through an SRB3 (Signalling Radio Bearer 3).

As one embodiment, the first message is transmitted through a PDSCH (Physical Downlink Shared Channel).

As one embodiment, the first message comprises one RRCReconfiguration message.

As one embodiment, the first message comprises one RRCResume message.

As one embodiment, the first message comprises one RRCReestablishment message.

As one embodiment, the first message comprises one RRCSetup message.

As one embodiment, the first message is one RRCReconfiguration message.

As one embodiment, the first message is one RRCResume message.

As one embodiment, the first message is one RRCReestablishment message.

As one embodiment, the first message is one RRCSetup message.

As one embodiment, the first message indicates the configuration information.

As one embodiment, the first message comprises a first-type information block for each cell in at least one cell, and the first-type information block comprises the configuration information.

As one sub-embodiment of the above embodiment, only part of fields in the first-type information block comprise the configuration information.

As one sub-embodiment of the above embodiment, all fields in the first-type information block comprise the configuration information.

As one sub-embodiment of the above embodiment, the first-type information block comprises measurement configuration of the one cell.

As one sub-embodiment of the above embodiment, the first-type information block is one ServingCellConfig IE.

As one sub-embodiment of the above embodiment, the first-type information block comprises one uplinkConfig field.

As one sub-embodiment of the above embodiment, the first-type information block comprises one PDCCH-ServingCellConfig IE.

As one sub-embodiment of the above embodiment, the first-type information block comprises one PDSCH-ServingCellConfig IE.

As one sub-embodiment of the above embodiment, the first-type information block comprises one CSI-MeasConfig IE.

As one embodiment, the configuration information of the first cell comprises configuration information of a physical layer of the first cell.

As one embodiment, the configuration information of the first cell comprises configuration information of a protocol layer above a physical layer of the first cell.

As one embodiment, the configuration information of the first cell comprises at least part of fields in one CellGroupConfig IE.

As one embodiment, the configuration information of the first cell comprises at least part of fields in one ServingCellConfig IE.

As one embodiment, the configuration information of the first cell comprises common configuration information (ConfigCommon) of the first cell.

As one embodiment, the configuration information of the first cell comprises at least part of fields in a ServingCellConfigCommonSIB IE.

As one embodiment, the configuration information of the first cell comprises at least part of fields in a ServingCellConfigCommon IE.

As one embodiment, the configuration information of the first cell comprises a PDCCH-ServingCellConfigCommon IE.

As one embodiment, the configuration information of the first cell comprises a PDSCH-ServingCellConfigCommon IE.

As one embodiment, the configuration information of the first cell comprises downlink common configuration (DownlinkConfigCommon) of the first cell.

As one embodiment, the configuration information of the first cell comprises uplink common configuration (UplinkConfigCommon) of the first cell.

As one embodiment, the configuration information of the first cell comprises a C(Cell)-RNTI (Radio Network Temporary Identifier) of the first node in the first cell.

As one embodiment, the configuration information of the first cell comprises a PCI of the first cell.

As one embodiment, the configuration information of the first cell comprises one servingCellMO field.

As one embodiment, the configuration information of the first cell comprises a period of an SSB of the first cell.

As one sub-embodiment of the above embodiment, the SSB is an SS (Synchronization Signals)/PBCH.

As one sub-embodiment of the above embodiment, the SSB is a Synchronization Signals Block.

As one embodiment, the configuration information of the first cell comprises PBCH (Physical broadcast channel) configuration of the first cell.

As one embodiment, the configuration information of the first cell comprises at least part of fields in one RRCReconfiguration-IE.

As one embodiment, the configuration information of the first cell comprises at least one MeasConfig IE.

As one embodiment, the configuration information of the first cell comprises at least one MeasObjectNR IE.

As one embodiment, the first cell is one serving cell.

As one embodiment, the first cell is a last serving cell.

As one embodiment, the first cell is one cell ever served by the first node.

As one embodiment, the first cell is one candidate cell.

As one embodiment, the first cell is one candidate cell of a second cell, and the second cell is one SpCell (Special Cell, i.e., PCell (Primary Cell) and PSCell (Primary SCG Cell)) of the first node.

As one embodiment, the candidate cell refers to a CHO (Conditional Handover) candidate cell.

As one embodiment, the candidate cell refers to any one of an LTM candidate cell or the CHO candidate cell.

As one embodiment, the candidate cell refers to a candidate cell for LTM switch.

As one embodiment, the candidate cell refers to the LTM candidate cell.

As one embodiment, the candidate cell refers to a candidate SpCell.

As one embodiment, the first cell is one target cell.

As one embodiment, the target cell refers to a target SpCell.

As one embodiment, the target cell refers to a target cell of handover.

As one embodiment, the target cell refers to a target cell of LTM switch.

As one embodiment, the LTM switch refers to: LTM handover.

As one embodiment, the LTM switch refers to: LTM transition.

As one embodiment, the first signaling indicates that the first cell is the serving cell.

As one embodiment, the first signaling indicates that the first cell is the target cell.

As one embodiment, the first signaling indicates that the first cell is the candidate cell.

As one embodiment, the SpCell is a PCell (Primary Cell).

As one embodiment, the SpCell is a PSCell (Primary SCG (Secondary Cell Group) Cell, i.e., Primary SCG Cell).

As one embodiment, a sending moment of the second signaling is earlier than a receiving moment of the first signaling.

As one embodiment, the sending moment of the second signaling is not later than the receiving moment of the first signaling.

As one embodiment, the second signaling triggers the first signaling.

As one embodiment, the second signaling does not trigger the first signaling.

As one embodiment, the second signaling is unrelated to sending of the first signaling.

As one embodiment, the second signaling is transmitted through a DCCH.

As one embodiment, the second signaling is transmitted through an SRB1.

As one embodiment, the second signaling is transmitted through an SRB3.

As one embodiment, the second signaling is transmitted through an SRB4.

As one embodiment, the second signaling comprises signaling of at least one RRC sub-layer.

As one embodiment, the second signaling comprises signaling of a protocol layer under at least one RRC sub-layer.

As one embodiment, the second signaling is transmitted through a PUCCH.

As one embodiment, the second signaling is transmitted through an MSGA.

As one embodiment, the second signaling is transmitted through an Msg3.

As one embodiment, the second signaling is transmitted through a PUSCH.

As one embodiment, the second signaling is transmitted through UCI.

As one embodiment, the second signaling is transmitted through a MAC CE.

As one embodiment, signaling of the RRC sub-layer is one RRC message.

As one embodiment, the signaling of the RRC sub-layer is one RRC IE.

As one embodiment, the second signaling is the signaling of the RRC sub-layer.

As one embodiment, the second signaling is the signaling of the protocol layer under the RRC sub-layer.

As one embodiment, the second signaling is signaling of an L1/L2.

As one embodiment, the first signaling is used for triggering handover.

As one embodiment, the first signaling is used for triggering re-establishment.

As one embodiment, the first signaling is used for LTM switch.

As one embodiment, the first signaling is one handover command.

As one embodiment, the first signaling is one connect command.

As one embodiment, the first signaling is one LTM switch command.

As one embodiment, the first signaling is signaling of one RRC sub-layer.

As one embodiment, the first signaling comprises one reconfigurationWithSync field.

As one embodiment, the first signaling comprises signaling of one MAC sub-layer.

As one embodiment, the first signaling is the signaling of one MAC sub-layer.

As one embodiment, the first signaling comprises signaling of one physical layer.

As one embodiment, the first signaling is the signaling of one physical layer.

As one embodiment, the first signaling comprises the signaling of the one MAC sub-layer and the signaling of the one physical layer.

As one embodiment, the first signaling is the signaling of the one MAC sub-layer and the signaling of the one physical layer.

As one embodiment, the signaling of the one MAC sub-layer is one MAC sub-PDU comprising a MAC CE.

As one embodiment, the signaling of the one MAC sub-layer is one MAC subheader.

As one embodiment, the signaling of the one MAC sub-layer is one MAC CE.

As one embodiment, the signaling of the one physical layer is one piece of DCI.

As one embodiment, the signaling of the one physical layer is transmitted on a PDCCH.

As one embodiment, the signaling of the one physical layer is a DCI payload.

As one embodiment, the signaling of the one physical layer is a DCI format.

As one embodiment, the first signaling indicates a first identifier of the first cell.

As one embodiment, the first signaling indicates the first identifier associated with the first cell.

As one embodiment, the first identifier of the first cell is configured by an RRC message.

As one embodiment, the first identifier of the first cell is indicated by the RRC message.

As one embodiment, the first identifier of the first cell is one physical identifier.

As one embodiment, the first identifier of the first cell comprises one PCI.

As one embodiment, the first identifier of the first cell is one PCI.

As one embodiment, the first identifier of the first cell is one logical identifier.

As one embodiment, the first identifier of the first cell is one serving cell identifier.

As one embodiment, the first identifier of the first cell is one target cell identifier.

As one embodiment, the first identifier of the first cell is one candidate cell identifier.

As one embodiment, the first identifier of the first cell is a configuration identifier of one candidate cell.

As one embodiment, the first identifier of the first cell is an identifier associated with the configuration information of the first cell.

As one embodiment, the first identifier of the first cell is one identifier in the configuration information of the first cell.

As one embodiment, the first identifier of the first cell is one identifier of the configuration information configured for the first cell.

As one embodiment, the first signaling comprises one field that can be used for indicating a timing advance.

As one embodiment, the first signaling comprises one field that can be used for indicating time-frequency resources.

As one embodiment, the first signaling comprises one field that can be used for indicating a candidate SpCell.

As one embodiment, the first signaling triggers application of the configuration information of the first cell.

As one embodiment, at least the first signaling triggers application of the configuration information of the first cell.

As one embodiment, the first signaling being received triggers the configuration information of the first cell being applied.

As one embodiment, at least the first signaling being received triggers the configuration information of the first cell being applied.

As one embodiment, at least after the first signaling is received, applying the configuration information of the first cell is started.

As one embodiment, as long as the first signaling is received, applying the configuration information of the first cell is started.

As one embodiment, when the first signaling is received, applying the configuration information of the first cell is started.

As one embodiment, when the first signaling is received, if a measurement result for the first cell meets a threshold, applying the configuration information of the first cell is started.

As one embodiment, when the first signaling is received, a MAC sub-layer of the first node sends one indication to an RRC sub-layer of the first node; and in response to receiving the one indication at the RRC sub-layer of the first node, applying the configuration information of the first cell is started.

As one embodiment, the meaning of a behavior of applying the configuration information of the first cell comprises: connection to the first cell.

As one embodiment, the meaning of the behavior of applying the configuration information of the first cell comprises: transition to the first cell.

As one embodiment, the meaning of the behavior of applying the configuration information of the first cell comprises: handover to the first cell.

As one embodiment, the meaning of the behavior of applying the configuration information of the first cell comprises: executing handover from the second cell to the first cell.

As one embodiment, the meaning of the behavior of applying the configuration information of the first cell comprises: handing over the SpCell of the first node to the first cell.

As one embodiment, the meaning of the behavior of applying the configuration information of the first cell comprises: handing over the PCell of the first node to the first cell.

As one embodiment, the meaning of the behavior of applying the configuration information of the first cell comprises: executing a random access procedure on the first cell.

As one embodiment, the meaning of the behavior of applying the configuration information of the first cell comprises: spatial filtering of an RS resource associated with the first cell is applied to a radio link.

As one embodiment, the meaning of the behavior of applying the configuration information of the first cell comprises: the spatial filtering of the RS resource associated with the first cell is applied to the radio link, and spatial filtering of an RS resource associated with the second cell is released.

As one embodiment, the meaning of the behavior of applying the configuration information of the first cell comprises: the spatial filtering of the RS resource associated with the first cell is applied to the radio link, and the spatial filtering of the RS resource associated with the second cell is not released.

As one embodiment, before the configuration information of the first cell is applied, spatial filtering of any RS resource of the first cell is not applied to wireless transmission.

As one embodiment, the configuration information of the first cell being not successfully applied refers to: a radio link failure (RLF).

As one sub-embodiment of the above embodiment, after the second signaling is sent, the first node experiences the radio link failure before executing handover.

As one sub-embodiment of the above embodiment, after the second signaling is sent, the first node experiences the radio link failure in the second cell before executing handover.

As one embodiment, the configuration information of the first cell being not successfully applied refers to: a handover failure.

As one embodiment, the configuration information of the first cell being not successfully applied refers to: a radio access failure.

As one embodiment, the configuration information of the first cell being not successfully applied refers to: a reconfiguration with sync failure.

As one embodiment, the configuration information of the first cell being not successfully applied refers to: an RRC re-establishment failure.

As one embodiment, the configuration information of the first cell being not successfully applied refers to: an LTM switch failure.

As one embodiment, the random access procedure on the first cell being not successfully completed is used for determining that the configuration information of the first cell is not successfully applied.

As one embodiment, specified signaling being not monitored on the first cell is used for determining that the configuration information of the first cell is not successfully applied.

As one sub-embodiment of the above embodiment, after the first signaling is received, the specified signaling is monitored on the first cell.

As one sub-embodiment of the above embodiment, the specified signaling is monitored on a search space (SS) specified on the first cell.

As one sub-embodiment of the above embodiment, the specified signaling is monitored on a beam specified on the first cell.

As one sub-embodiment of the above embodiment, the specified signaling is monitored according to a specified TCI state on the first cell.

As one sub-embodiment of the above embodiment, the specified signaling is identified by a first RNTI.

As one sub-embodiment of the above embodiment, a first RNTI is a C-RNTI of the first node in the first cell.

As one sub-embodiment of the above embodiment, the first RNTI is indicated by the configuration information of the first cell.

As one sub-embodiment of the above embodiment, the first RNTI is indicated by the first signaling.

As one embodiment, the expiration of a first timer is used for determining that the configuration information of the first cell is not successfully applied.

As one sub-embodiment of the above embodiment, when the first timer expires, the configuration information of the first cell being not successfully applied is determined.

As one sub-embodiment of the above embodiment, the first timer is one timer of the RRC sub-layer.

As one sub-embodiment of the above embodiment, the first timer is one T304.

As one sub-embodiment of the above embodiment, the first timer is a timer other than one T304 of the RRC sub-layer.

As one sub-embodiment of the above embodiment, the first timer is a timer of one MAC sub-layer.

As one sub-embodiment of the above embodiment, in response to receiving the first signaling, the first timer is started.

As one sub-embodiment of the above embodiment, the first signaling being received triggers the start of the first timer.

As one sub-embodiment of the above embodiment, an indication of the first signaling being determined triggers the start of the first timer.

As one sub-embodiment of the above embodiment, the indication of the first signaling being applied triggers the start of the first timer.

As one sub-embodiment of the above embodiment, a behavior of starting applying the configuration information of the first cell triggers the start of the first timer.

As one sub-embodiment of the above embodiment, when the first signaling is received, the first timer is started.

As one sub-embodiment of the above embodiment, when the indication of the first signaling is determined, the first timer is started.

As one sub-embodiment of the above embodiment, when the indication of the first signaling is applied, the first timer is started.

As one sub-embodiment of the above embodiment, with the behavior of starting applying the configuration information of the first cell, the first timer is started.

As one sub-embodiment of the above embodiment, when the first signaling is received, the MAC sub-layer of the first node sends one indication to the RRC sub-layer of the first node; and in response to receiving the one indication at the RRC sub-layer of the first node, the first timer is started.

As one embodiment, the specified signaling is monitored within a given time interval.

As one embodiment, the specified signaling is monitored when the first timer is running.

As one embodiment, the random access procedure on the first cell being not successfully completed within the given time interval is used for determining that the configuration information of the first cell is not successfully applied; and the given time interval is a running time of the first timer.

As one embodiment, the random access procedure on the first cell being not successfully completed when the first timer expires is used for determining that the configuration information of the first cell is not successfully applied.

As one embodiment, the specified signaling being not monitored on the first cell within the given time interval is used for determining that the configuration information of the first cell is not successfully applied; and the given time interval is the running time of the first timer.

As one embodiment, the specified signaling being not monitored on the first cell when the first timer expires is used for determining that the configuration information of the first cell is not successfully applied.

As one embodiment, the behavior of applying the configuration information of the first cell comprises monitoring the specified signaling on the first cell.

As one embodiment, the behavior of applying the configuration information of the first cell comprises executing the random access procedure on the first cell.

As one embodiment, the behavior of applying the configuration information of the first cell comprises executing a data transmission procedure on the first cell.

As one embodiment, the first UE variable is one UE variable.

As one embodiment, the first UE variable is used for storing information about a handover procedure.

As one embodiment, the first UE variable stores information about at least the handover procedure.

As one embodiment, the first UE variable comprises information about the handover procedure.

As one embodiment, the first UE variable belongs to a UEInformationResponse message.

As one embodiment, the first UE variable comprises one VarRLF-Report.

As one embodiment, the first UE variable is one VarRLF-Report.

As one embodiment, the first UE variable is one VarRLF-Report-r16.

As one embodiment, the first UE variable is one VarRLF-Report-r18.

As one embodiment, the first UE variable is one VarRLF-Report-r19.

As one embodiment, the first UE variable is one VarRLF-Report, and the first information block is one rlf-Report.

As one embodiment, the first information block comprises one connectionFailureType field, and the one connectionFailureType field is set to hof.

As one embodiment, the first information block comprises one connectionFailureType field, and the one connectionFailureType field is set to rlf.

As one embodiment, a name of the first field in the first information block comprises FailedPCellId.

As one embodiment, the name of the first field in the first information block comprises reconnectCellId.

As one sub-embodiment of the above embodiment, the first field in the first information block is one reconnectCellId field.

As one sub-embodiment of the above embodiment, the first field in the first information block is one failedPCellId field.

As one sub-embodiment of the above embodiment, the first field in the first information block is one failedPCellId-r16 field.

As one sub-embodiment of the above embodiment, the first field in the first information block is one failedPCellId-r18 field.

As one sub-embodiment of the above embodiment, the first field in the first information block is one failedPCellId-r19 field.

As one embodiment, the first field in the first information block is one nrFailedPCellId field in one failedPCellId field.

As one embodiment, the first field in the first information block is one eutraFailedPCellId field in one failedPCellId field.

As one embodiment, the identity of the first cell is one bit string.

As one embodiment, the identity of the first cell uniquely indicates the first cell within one tracking area.

As one embodiment, the identity of the first cell uniquely indicates the first cell within a plurality of tracking areas.

As one embodiment, the identity of the first cell uniquely indicates the first cell within one PLMN.

As one embodiment, the identity of the first cell uniquely indicates the first cell within a plurality of PLMNs.

As one embodiment, the identity of the first cell comprises a global cell identity of the first cell.

As one embodiment, the identity of the first cell is the global cell identity and a tracking area code of the first cell.

As one embodiment, the identity of the first cell comprises a PCI (physical cell identity) of the first cell.

As one embodiment, the identity of the first cell is the PCI (physical cell identity) and a carrier frequency of the first cell.

As one embodiment, if the global cell identity and the tracking area code of the first cell are available, the identity of the first cell is the global cell identity and the tracking area code of the first cell; otherwise, the identity of the first cell is the PCI of the first cell.

As one embodiment, a phrase that the second field in the first information block indicates a first time interval refers to: the second field in the first information block is set to the first time interval.

As one embodiment, the phrase that the second field in the first information block indicates a first time interval refers to: the second field in the first information block indicates whether the first time interval exceeds a first value.

As one embodiment, the phrase that the second field in the first information block indicates a first time interval refers to: when the first time interval does not exceed the first value, the second field in the first information block is set to the first time interval; when the first time interval exceeds the first value, the second field in the first information block is set to the first value; and the first value is a maximum candidate value of the second field in the first information block.

As one sub-embodiment of the above embodiment, the second field in the first information block is set to the first time interval, and the first time interval does not exceed the first value.

As one sub-embodiment of the above embodiment, the second field in the first information block is set to the first value, and the first time interval exceeds the first value.

As one embodiment, the second field comprises the first time interval.

As one embodiment, the second field comprises only the first time interval.

As one embodiment, the second field comprises an index related to an indication of the first time interval.

As one embodiment, a name of the second field comprises time.

As one embodiment, the second field belongs to rlf-report.

As one embodiment, the second field belongs to timeSinceFailure-r18.

As one embodiment, the second field belongs to timeSinceFailure-r19.

As one embodiment, the second field belongs to timeConnFailure-r18.

As one embodiment, the second field belongs to timeConnFailure-r19.

As one embodiment, the second field belongs to timeSinceLTM-Reconfig-r18.

As one embodiment, the second field belongs to timeSinceLTM-Reconfig-r19.

As one embodiment, the second field belongs to timeConnLTM-Failure-r18.

As one embodiment, the second field belongs to timeConnLTM-Failure-r19.

As one embodiment, the second field is timeSinceFailure-r18.

As one embodiment, the second field is timeSinceFailure-r19.

As one embodiment, the second field is timeConnFailure-r18.

As one embodiment, the second field is timeConnFailure-r19.

As one embodiment, the second field is timeSinceLTM-Reconfig-r18.

As one embodiment, the second field is timeSinceLTM-Reconfig-r19.

As one embodiment, the second field is timeConnLTM-Failure-r18.

As one embodiment, the second field is timeConnLTM-Failure-r19.

As one embodiment, the first time interval comprises a positive integer of milliseconds.

As one embodiment, the first time interval comprises a positive integer of seconds.

As one embodiment, the first time interval depends on the second signaling.

As one sub-embodiment of the above embodiment, a starting moment of the first time interval depends on the second signaling.

As one sub-embodiment of the above embodiment, an ending moment of the first time interval depends on the second signaling.

As one sub-embodiment of the above embodiment, the starting moment of the first time interval depends on a moment at which the second signaling is sent.

As one sub-embodiment of the above embodiment, the ending moment of the first time interval depends on the moment at which the second signaling is sent.

As one sub-embodiment of the above embodiment, the starting moment of the first time interval depends on a moment at which content of the second signaling is determined.

As one sub-embodiment of the above embodiment, the ending moment of the first time interval depends on the moment at which the content of the second signaling is determined.

As one embodiment, the first time interval depends on the first signaling.

As one sub-embodiment of the above embodiment, the starting moment of the first time interval depends on the first signaling.

As one sub-embodiment of the above embodiment, the ending moment of the first time interval depends on the first signaling.

As one sub-embodiment of the above embodiment, the starting moment of the first time interval depends on a moment at which the first signaling is received.

As one sub-embodiment of the above embodiment, the starting moment of the first time interval is the moment at which the first signaling is received.

As one sub-embodiment of the above embodiment, the ending moment of the first time interval depends on the moment at which the first signaling is received.

As one sub-embodiment of the above embodiment, the ending moment of the first time interval is the moment at which the first signaling is received.

As one sub-embodiment of the above embodiment, the starting moment of the first time interval depends on a moment at which the first signaling is executed.

As one sub-embodiment of the above embodiment, the starting moment of the first time interval is the moment at which the first signaling is executed.

As one sub-embodiment of the above embodiment, the ending moment of the first time interval depends on the moment at which the first signaling is executed.

As one sub-embodiment of the above embodiment, the ending moment of the first time interval is the moment at which the first signaling is executed.

As one sub-embodiment of the above embodiment, the first time interval is an elapsed time since the moment at which the first signaling is received.

As one sub-embodiment of the above embodiment, the first time interval is the elapsed time since the moment at which the first signaling is executed.

As one sub-embodiment of the above embodiment, the first time interval is the elapsed time until the moment at which the first signaling is received.

As one sub-embodiment of the above embodiment, the first time interval is the elapsed time until the moment at which the first signaling is executed.

As one sub-embodiment of the above embodiment, the starting moment of the first time interval depends on a moment at which the indication of the first signaling is applied.

As one sub-embodiment of the above embodiment, the ending moment of the first time interval depends on the moment at which the indication of the first signaling is applied.

As one embodiment, the first time interval depends on the second signaling and the first signaling.

As one sub-embodiment of the above embodiment, the starting moment of the first time interval depends on the second signaling, and the ending moment of the first time interval depends on the first signaling.

As one sub-embodiment of the above embodiment, the starting moment of the first time interval depends on the moment at which the second signaling is sent, and the ending moment of the first time interval depends on the moment at which the first signaling is received.

As one sub-embodiment of the above embodiment, the starting moment of the first time interval depends on the moment at which the second signaling is sent, and the ending moment of the first time interval depends on the moment at which the indication of the first signaling is applied.

As one sub-embodiment of the above embodiment, the starting moment of the first time interval depends on the moment at which the content of the second signaling is determined, and the ending moment of the first time interval depends on a moment at which an indication of the first signaling is received.

As one sub-embodiment of the above embodiment, the starting moment of the first time interval depends on the moment at which the content of the second signaling is determined, and the ending moment of the first time interval depends on the moment at which the indication of the first signaling is applied.

As one sub-embodiment of the above embodiment, the first time interval is a time from the moment at which the second signaling is sent to the moment at which the first signaling is received.

As one sub-embodiment of the above embodiment, the first time interval is a time from the moment at which the second signaling is sent to the moment before the first signaling is received.

As one sub-embodiment of the above embodiment, the first time interval is a time from the moment at which the second signaling is sent to the moment after the first signaling is received.

As one embodiment, the first node supports an RLF-Report for handover.

As one embodiment, the first node supports the RLF-Report for an RLF.

As one embodiment, the first node supports the RLF-Report for CHO.

As one embodiment, the first node supports the RLF-Report for LTM.

### Embodiment 2

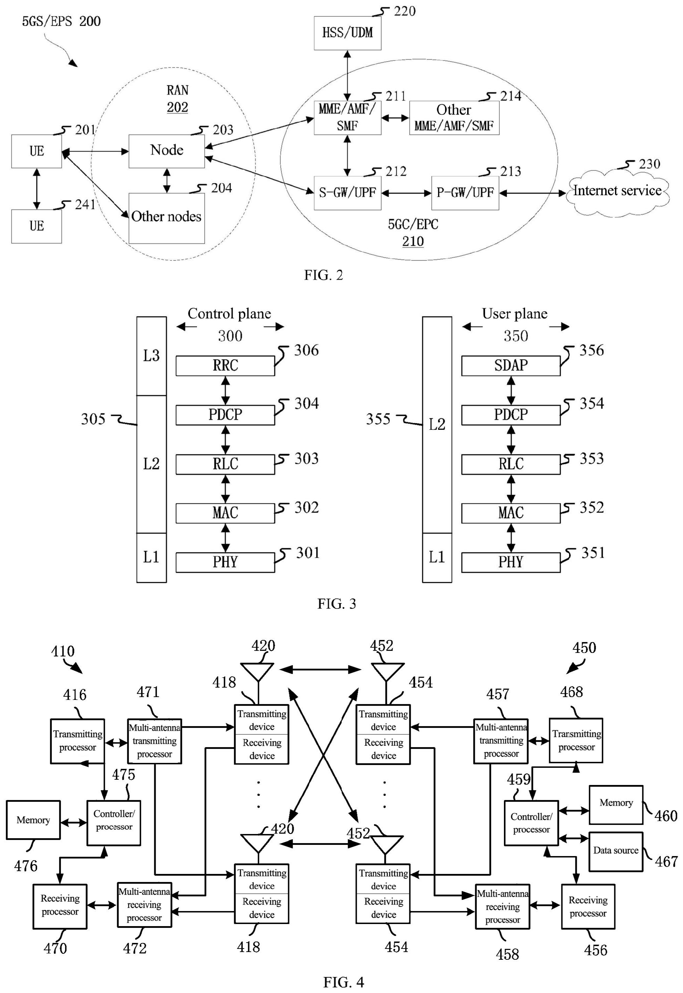

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terminologies. The 5GS/EPS 200 comprises at least one of UE (User Equipment) 201, a RAN (Radio Access Network) 202, a 5GC (5G Core Network)/EPC (Evolved Packet Core) 210, an HSS (Home Subscriber Server)/UDM (Unified Data Management) 220 and an Internet service 230. The 5GS/EPS may be interconnected with other access networks, but these entities/interfaces are not shown for simplicity. As shown, the 5GS/EPS provides packet switching services, however, those skilled in the art will readily appreciate that the various concepts presented throughout the present application may be extended to networks providing circuit switching services or other cellular networks. The RAN comprises a node 203 and other nodes 204. The node 203 provides user and control plane protocol termination towards the UE201. The node 203 may be connected to other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The node 203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or a certain other suitable terminology. The node 203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises operator-corresponding Internet protocol services, which may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment (UE).

As one embodiment, the UE201 is one BaseStation device (BS).

As one embodiment, the UE201 is one relay device.

As one embodiment, the UE201 is one gateway device.

As one embodiment, the node 203 corresponds to a second node in the present application.

As one embodiment, the node 203 is one base station device.

As one embodiment, the node 203 is one piece of user equipment.

As one embodiment, the node 203 is one relay device.

As one embodiment, the node 203 is one gateway device.

Typically, the UE201 is one piece of user equipment, and the node 203 is one base station device.

Typically, the UE201 is one piece of user equipment, and the node 203 is one piece of user equipment.

Typically, the UE201 is one base station device, and the node 203 is one base station device.

As one embodiment, the user equipment supports transmission in a non-terrestrial network (NTN).

As one embodiment, the user equipment supports transmission in a terrestrial network.

As one embodiment, the user equipment supports dual connection (DC) transmission.

As one embodiment, the user equipment comprises an aircraft.

As one embodiment, the user equipment comprises a vehicle-mounted terminal.

As one embodiment, the user equipment comprises a ship.

As one embodiment, the user equipment comprises an IoT terminal.

As one embodiment, the user equipment comprises a terminal of industrial IoT.

As one embodiment, the user equipment comprises a device supporting low-latency and high-reliability transmission.

As one embodiment, the user equipment comprises a test device.

As one embodiment, the user equipment comprises a signaling tester.

As one embodiment, the user equipment comprises an IAB (Integrated Access and Backhaul)-MT.

As one embodiment, the user equipment supports generating reports using AI (Artificial Intelligence) or Machine Learning.

As one embodiment, the user equipment supports generating a trained model using training data or generation of partial parameters in a trained model using trained data.

As one embodiment, the user equipment supports determining a first message through training.

As one embodiment, the user equipment supports determining a first cell through training.

As one embodiment, the user equipment is a terminal supporting Massive-MIMO.

As one embodiment, the base station device supports transmission in the non-terrestrial network.

As one embodiment, the base station device supports transmission in the terrestrial network.

As one embodiment, the base station device comprises a base transceiver station (BTS).

As one embodiment, the base station device comprises a NodeB (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device comprises a CU (Centralized Unit).

As one embodiment, the base station device comprises a DU (Distributed Unit).

As one embodiment, the base station device comprises a TRP (Transmitter Receiver Point).

As one embodiment, the base station device comprises a Macro Cellular base station.

As one embodiment, the base station device comprises a micro cell base station.

As one embodiment, the base station device comprises a pico cell base station.

As one embodiment, the base station device comprises a Femtocell.

As one embodiment, the base station device comprises a flight platform device.

As one embodiment, the base station device comprises a satellite device.

As one embodiment, the base station device comprises a test device.

As one embodiment, the base station device comprises a signaling tester.

As one embodiment, the base station device comprises a gateway device.

As one embodiment, the base station device comprises an IAB-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the base station device supports Massive-MIMO-based transmission.

As one embodiment, the base station device supports decompressing CSI using AI or deep learning.

### Embodiment 3

Embodiment 3 shows a schematic diagram of an embodiment of one wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 illustrates the radio protocol architecture for the control plane 300 using three layers: a Layer 1, a Layer 2, and a Layer 3. The Layer 1 (L1 layer) is the lowest layer and implements various PHY (Physical Layer) signal processing functions. The L1 layer will be referred to as a PHY301 herein. The Layer 2 (L2 layer) 305 is above the PHY301, and comprises a MAC (Medium Access Control) sub-layer 302, an RLC (Radio Link Control) sub-layer 303, and a PDCP (Packet Data Convergence Protocol) sub-layer 304. The PDCP sub-layer 304 provides multiplexing between different radio bearers and logical channels. The PDCP sub-layer 304 also provides security by encrypting data packets, and provides handover support. The RLC sub-layer 303 provides segmentation and reassembly of upper-layer data packets, retransmission of lost data packets, and reordering of data packets to compensate for out-of-order reception caused by an HARQ (Hybrid Automatic Repeat Request). The MAC sub-layer 302 provides multiplexing between logical and transport channels. The MAC sub-layer 302 is also responsible for assigning various radio resources (e.g., resource blocks) in one cell. The MAC sub-layer 302 is also responsible for HARQ operations. An RRC (Radio Resource Control) sub-layer 306 in the Layer 3 (L3 layer) in the control plane 300 is responsible for obtaining radio resources (i.e., radio bearers) and configuring lower layers using RRC signaling. The radio protocol architecture for the user plane 350 comprises the Layer 1 (L1 layer) and the Layer 2 (L2 layer). The radio protocol architecture in the user plane 350 is substantially the same as that for the corresponding layers and sub-layers in the control plane 300 for a physical layer 351, a PDCP sub-layer 354 in an L2 layer 355, an RLC sub-layer 353 in the L2 layer 355, and a MAC sub-layer 352 in the L2 layer 355, but the PDCP sub-layer 354 also provides header compression for the upper-layer data packets to reduce radio transmission overhead. The L2 layer 355 in the user plane 350 also comprises an SDAP (Service Data Adaptation Protocol) sub-layer 356, and the SDAP sub-layer 356 is responsible for mapping between a QoS stream and a data radio bearer (DRB) to support the diversity of services.

As one embodiment, the wireless protocol architecture in FIG. 3 is applicable to a first node in the present application.

As one embodiment, the wireless protocol architecture in FIG. 3 is applicable to a second node in the present application.

As one embodiment, a first message in the present application is generated at an RRC306.

As one embodiment, the first message in the present application is generated at a MAC302 or a MAC352.

As one embodiment, first signaling in the present application is generated at the RRC306.

As one embodiment, the first signaling in the present application is generated at the MAC302 or the MAC352.

As one embodiment, the first signaling in the present application is generated at the PHY301 or a PHY351.

As one embodiment, second signaling in the present application is generated at the RRC306.

As one embodiment, the second signaling in the present application is generated at the MAC302 or the MAC352.

As one embodiment, the second signaling in the present application is generated at the PHY301 or the PHY351.

As one embodiment, a first information block in a first UE variable in the present application is set at the RRC306.

As one embodiment, the first information block in the first UE variable in the present application is set at the MAC302 or the MAC352.

As one embodiment, a second message in the present application is generated at the RRC306.

As one embodiment, the second message in the present application is generated at the MAC302 or the MAC352.

As one embodiment, a third message in the present application is generated at the RRC306.

As one embodiment, the third message in the present application is generated at the MAC302 or the MAC352.

### Embodiment 4

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource assignment to the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to subcarriers, multiplexes with reference signals (e.g., pilots) in the time domain and/or frequency domain, and then uses an inverse fast Fourier transform (IFFT) to produce a physical channel carrying a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier, and converts the radio frequency stream into the baseband multi-carrier symbol stream and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operations. In the frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the first communication device 450. Symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements functions of the L2 layer. The controller/processor 459 may be associated with the memory 460 that stores program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the data source 467 is used for providing the upper-layer data packets to the controller/processor 459. The data source 467 represents all protocol layers above the L2 layer. Similar to a sending function at the second communication device 410 as described in the transmission from the second communication device 410 to the first communication device 450, the controller/processor 459 implements header compression, encryption, packet segmentation and reordering, and multiplexing between logical and transport channels based on wireless resource assignment, and implements the function of the L2 layer for the user plane and the control plane. The controller/processor 459 is also responsible for retransmission of lost packets and signaling to the second communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the first communication device 450 to the second communication device 410, functions at the second communication device 410 are similar to receiving functions at the first communication device 450 as described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements the functions of the L2 layer. The controller/processor 475 may be associated with the memory 476 that stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. Upper-layer data packets from the controller/processor 475 may be provided to the core network.

As one embodiment, the first communication device 450 comprises: at least one processor and at least one memory, wherein the at least one memory comprises a computer program code; and the at least one memory and the computer program code are configured to be used together with the at least one processor; and the first communication device 450 at least: receives a first message, wherein the first message comprises configuration information of a first cell; sends second signaling; receives first signaling, wherein the first signaling is signaling of a protocol layer under an RRC sub-layer, and the first signaling indicates the first cell; in response to the first signaling being received, applies the configuration information of the first cell; in response to the configuration information of the first cell being not successfully applied, sets a first information block in a first UE variable, wherein the first information block is used for indicating information about a wireless connection failure, wherein a first field in the first information block is set, and the first field in the first information block indicates an identity of the first cell; and a second field in the first information block is set, the second field in the first information block indicates a first time interval, and the first time interval depends on at least one of the second signaling or the first signaling.

As one embodiment, the first communication device 450 comprises: a memory storing a computer-readable instruction program, wherein the computer-readable instruction program generates actions when executed by at least one processor, the actions comprising: receiving the first message, wherein the first message comprises the configuration information of the first cell; sending the second signaling; receiving the first signaling, wherein the first signaling is the signaling of the protocol layer under the RRC sub-layer, and the first signaling indicates the first cell; in response to the first signaling being received, applying the configuration information of the first cell; in response to the configuration information of the first cell being not successfully applied, setting the first information block in the first UE variable, wherein the first information block is used for indicating the information about the wireless connection failure, wherein the first field in the first information block is set, and the first field in the first information block indicates the identity of the first cell; and the second field in the first information block is set, the second field in the first information block indicates the first time interval, and the first time interval depends on at least one of the second signaling or the first signaling.

As one embodiment, the second communication device 410 comprises: at least one processor and at least one memory, wherein the at least one memory comprises a computer program code; and the at least one memory and the computer program code are configured to be used together with the at least one processor. The second communication device 410 at least: sends a second message, wherein the second message comprises a first request indication; and in response to the second message being sent, receives a third message, wherein the third message comprises the first information block in the first UE variable; the third message comprises the first information block in the first UE variable depending on the first request indication; a recipient of the second message receives the first message, wherein the first message comprises the configuration information of the first cell; the recipient of the second message sends the second signaling; the recipient of the second message receives the first signaling, wherein the first signaling is the signaling of the protocol layer under the RRC sub-layer, and the first signaling indicates the first cell; in response to the first signaling being received, the recipient of the second message applies the configuration information of the first cell;in response to the configuration information of the first cell being not successfully applied, the recipient of the second message sets the first information block in the first UE variable, wherein the first information block is used for indicating the information about the wireless connection failure;the first field in the first information block is set, and the first field in the first information block indicates the identity of the first cell; the second field in the first information block is set, the second field in the first information block indicates the first time interval, and the first time interval depends on at least one of the second signaling or the first signaling.

As one embodiment, the second communication device 410 comprises: a memory storing a computer-readable instruction program, wherein the computer-readable instruction program generates actions when executed by at least one processor, the actions comprising: sending the second message, wherein the second message comprises the first request indication; and in response to the second message being sent, receiving the third message, wherein the third message comprises the first information block in the first UE variable; the third message comprises the first information block in the first UE variable depending on the first request indication; the recipient of the second message receives the first message, wherein the first message comprises the configuration information of the first cell; the recipient of the second message sends the second signaling; the recipient of the second message receives the first signaling, wherein the first signaling is the signaling of the protocol layer under the RRC sub-layer, and the first signaling indicates the first cell; in response to the first signaling being received, the recipient of the second message applies the configuration information of the first cell; in response to the configuration information of the first cell being not successfully applied, the recipient of the second message sets the first information block in the first UE variable, wherein the first information block is used for indicating the information about the wireless connection failure; the first field in the first information block is set, and the first field in the first information block indicates the identity of the first cell; the second field in the first information block is set, the second field in the first information block indicates the first time interval, and the first time interval depends on at least one of the second signaling or the first signaling.

As one embodiment, at least one of the antenna 452, the receiving device 454, the receiving processor 456, and the controller/processor 459 is used for receiving the first message.

As one embodiment, at least one of the antenna 420, the transmitting device 418, the transmitting processor 416, and the controller/processor 475 is used for sending the first message.

As one embodiment, at least one of the antenna 452, the receiving device 454, the receiving processor 456, and the controller/processor 459 is used for sending the second signaling.

As one embodiment, at least one of the antenna 420, the transmitting device 418, the transmitting processor 416, and the controller/processor 475 is used for receiving the second signaling.

As one embodiment, at least one of the antenna 452, the receiving device 454, the receiving processor 456, and the controller/processor 459 is used for receiving the first signaling.

As one embodiment, at least one of the antenna 420, the transmitting device 418, the transmitting processor 416, and the controller/processor 475 is used for sending the first signaling.

As one embodiment, at least one of the antenna 452, the receiving device 454, the receiving processor 456, and the controller/processor 459 is used for receiving the second message.

As one embodiment, at least one of the antenna 420, the transmitting device 418, the transmitting processor 416, and the controller/processor 475 is used for sending the second message.

As one embodiment, at least one of the antenna 452, the receiving device 454, the receiving processor 456, and the controller/processor 459 is used for sending the third message.

As one embodiment, at least one of the antenna 420, the transmitting device 418, the transmitting processor 416, and the controller/processor 475 is used for receiving the third message.

As one embodiment, the first communication device 450 corresponds to a first node in the present application.

As one embodiment, the first communication device 410 corresponds to a second node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

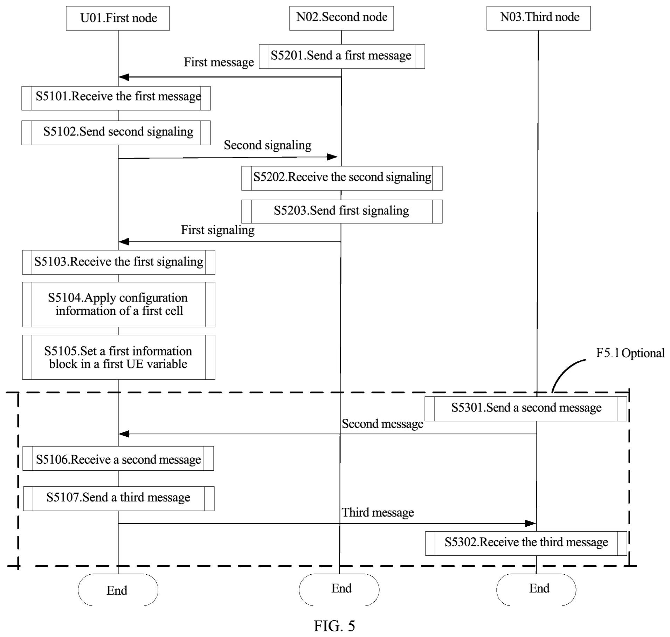

Embodiment 5 illustrates a flowchart of wireless signal transmission according to one embodiment of the present application, as shown in FIG. 5. It is particularly noted that the order in this example does not limit the signal transmission order and implementation order in the present application.

For **a first node U01,** in step S5101, a first message is received, wherein the first message comprises configuration information of a first cell; in step S5102, second signaling is sent; in step S5103, first signaling is received, wherein the first signaling is signaling of a protocol layer under an RRC sub-layer, and the first signaling indicates the first cell; in step S5104, in response to the first signaling being received, the configuration information of the first cell is applied; in step S5105, in response to the configuration information of the first cell being not successfully applied, a first information block in a first UE variable is set, wherein the first information block is used for indicating information about a wireless connection failure; in step S5106, a second message is received, wherein the second message comprises a first request indication; in step S5107, a third message is sent, wherein the third message comprises the first information block in the first UE variable; and the second message comprises the first information block in the first UE variable depending on the first request indication.

For **a second node N02,** in step S5201, the first message is sent; in step S5202, the second signaling is received; and in step S5203, the first signaling is sent.

For **a third node N03,** in step S5301, the second message is sent; and in step S5302, the third message is received.

In Embodiment 5, a first field in the first information block is set, and the first field in the first information block indicates an identity of the first cell; and a second field in the first information block is set, the second field in the first information block indicates a first time interval, and the first time interval depends on at least one of the second signaling or the first signaling.

As one embodiment, the step S5102 is before the step S5101.

As one embodiment, the step S5102 is after the step S5101.

As one embodiment, the step S5102 is before the step S5103.

As one embodiment, the step 55101 is before the step S5103.

As one embodiment, the first node U01 and the second node N02 are connected in a wireless mode.

As one embodiment, the first node U01 and the second node N02 are connected in a wired mode.

As one embodiment, the first node U01 and the second node N02 are connected via a Uu interface.

As one embodiment, the first node U01 and the second node N02 are connected via an IAB interface.

As one embodiment, the first node U01 and the second node N02 are connected via a PC5 interface.

As one embodiment, the third node N03 and the second node N02 are connected via a wireless interface.

As one embodiment, the third node N03 and the second node N02 are connected via a wired interface.

As one embodiment, the third node N03 and the second node N02 are connected via an Xn interface.

As one embodiment, the third node N03 and the second node N02 are connected via an X2 interface.

As one embodiment, there is ideal backhaul between the third node N03 and the second node N02.

As one embodiment, there is non-ideal backhaul between the third node N03 and the second node N02.

As one embodiment, the third node N03 is the second node N02.

As one embodiment, the third node N03 is not the second node N02.

As one embodiment, the third node N03 is one node other than the second node N02.

As one embodiment, the first node U01 receives the first message.

As one embodiment, the first node U01 receives the first message, and stores the configuration information of the first cell in the first message.

As one embodiment, the first node U01 receives the first message, and performs configuration according to the configuration information of the first cell in the first message.

As one embodiment, the first node U01 receives the first message, and performs configuration according to the configuration information of all cells comprising the first cell in the first message.

As one embodiment, the first node U01 receiving the first message triggers sending of the second signaling.

As one embodiment, the first node U01 sends the second signaling after receiving the first message.

As one embodiment, the first node U01 sends the second signaling after a period of time after receiving the first message.

As one sub-embodiment of the above embodiment, the period of time refers to: a time executing early synchronization.

As one sub-embodiment of the above embodiment, the period of time refers to: a time at which a first node processes the first message.

As one sub-embodiment of the above embodiment, the period of time refers to: a generation time of the second signaling.

As one embodiment, the first node U01 sends the second signaling.

As one embodiment, a moment at which the first node U01 sends the second signaling is before a moment of receiving the first signaling.

As one embodiment, the moment at which the first node U01 sends the second signaling is not later than the moment of receiving the first signaling.

As one embodiment, the first node U01 monitors a response to the second signaling within a certain time interval after sending the second signaling.

As one embodiment, the first node U01 monitors the response to the second signaling on a specified beam after sending the second signaling.

As one sub-embodiment of the above embodiment, the response to the second signaling is the first signaling.

As one sub-embodiment of the above embodiment, the response to the second signaling is not the first signaling.

As one sub-embodiment of the above embodiment, the response to the second signaling comprises the first signaling.

As one sub-embodiment of the above embodiment, the second signaling is unrelated to the first signaling.

As one embodiment, the second node N02 sends the first signaling.

As one embodiment, the second node N02 determines sending of the first signaling after receiving the second signaling.

As one embodiment, the second node N02 determines the sending of the first signaling before receiving the second signaling, and executes the sending of the first signaling after receiving the second signaling.

As one sub-embodiment of the above embodiment, the response to the first signaling is the third message.

As one sub-embodiment of the above embodiment, the response to the first signaling is not the third message.

As one sub-embodiment of the above embodiment, the response to the first signaling comprises the third message.

As one embodiment, the first node U01 applies the configuration information of the first cell after receiving the first signaling.

As one embodiment, the first node U01 applies the configuration information of the first cell after an indication of receiving the first signaling is determined.

As one embodiment, the first node U01 starts a first timer after receiving the first signaling.

As one embodiment, the first node U01 starts the first timer after the indication of receiving the first signaling is determined.

As one embodiment, the first node U01 sets the first information block in the first UE variable when the configuration information of the first cell is not successfully applied.

As one embodiment, the first node U01 sets the first information block in the first UE variable when the configuration information of the first cell is not successfully applied, the first field in the information block indicates the identity of the first cell, and the second field indicates the first time interval.

As one embodiment, the first time interval depends on the first signaling.

As one embodiment, the first time interval depends on the second signaling.

As one embodiment, the first time interval depends on the second signaling and the first signaling.

As one embodiment, a dashed box F5.1 is optional.

As one embodiment, the dashed box F5.1 exists.

As one sub-embodiment of the above embodiment, step S5204 is before the step S5201.

As one sub-embodiment of the above embodiment, the step S5204 is after the step S5201 and before the step S5202.

As one sub-embodiment of the above embodiment, the step S5204 is after the step S5202 and before the step S5203.

As one sub-embodiment of the above embodiment, the step S5204 is after the step S5203.

As one sub-embodiment of the above embodiment, at least after the first signaling is sent, the second message is received.

As one sub-embodiment of the above embodiment, at least after the first information block in the first UE variable is set, the second message is received.

As one sub-embodiment of the above embodiment, at least after the first UE variable is set, the second message is received.

As one sub-embodiment of the above embodiment, when the second message is received, the first UE variable comprises the first information block.

As one sub-embodiment of the above embodiment, before the second message is received, the first information block is not discarded.

As one sub-embodiment of the above embodiment, before the second message is received, the first UE variable is not released.

As one sub-embodiment of the above embodiment, the second message comprises the first request indication triggering the third message to comprise the first information block.

As one sub-embodiment of the above embodiment, the second message is transmitted through an SRB1.

As one sub-embodiment of the above embodiment, the second message is transmitted through a DCCH.

As one sub-embodiment of the above embodiment, the second message is one RRC message.

As one sub-embodiment of the above embodiment, the second message comprises one UEInformationRequest message.

As one sub-embodiment of the above embodiment, the second message is one UEInformationRequest message.

As one sub-embodiment of the above embodiment, the second message comprises the first request indication.

As one dependent embodiment of the above sub-embodiment, the first request indication is set to ture.

As one dependent embodiment of the above sub-embodiment, the first request indication is logMeasReportReq.

As one dependent embodiment of the above sub-embodiment, a name of the first request indication comprises connEstFailReportReq; the first UE variable comprises the information about the connection failure; and the configuration information of the first cell is not successfully applied.

As one dependent embodiment of the above sub-embodiment, the first request indication is connEstFailReportReq.

As one dependent embodiment of the above sub-embodiment, the first request indication is connEstFailReportReq-r16.

As one dependent embodiment of the above sub-embodiment, the first request indication is connEstFailReportReq-r18.

As one dependent embodiment of the above sub-embodiment, the first request indication is connEstFailReportReq-r19.

As one dependent embodiment of the above sub-embodiment, the name of the first request indication comprises rlf-ReportReq; the first UE variable comprises the information about the wireless connection failure; and the configuration information of the first cell is not successfully applied.

As one dependent embodiment of the above sub-embodiment, the first request indication is rlf-ReportReq.

As one dependent embodiment of the above sub-embodiment, the first request indication is rlf-ReportReq-r16.

As one dependent embodiment of the above sub-embodiment, the first request indication is rlf-ReportReq-r18.

As one dependent embodiment of the above sub-embodiment, the first request indication is rlf-ReportReq-r19.

As one sub-embodiment of the above embodiment, the first node U01 sends the third message.

As one sub-embodiment of the above embodiment, the first node U01 sends the third message, and the third node N03 receives the third message.

As one sub-embodiment of the above embodiment, the first node sends the third message, and the third node N03 does not receive the third message.

As one sub-embodiment of the above embodiment, the first node sends the third message, the third node N03 does not receive the third message from the first node, and the third node receives the third message through other nodes.

As one embodiment, after receiving the third message, the second node N02 forwards the third message to the third node N03.

As one dependent embodiment of the above sub-embodiment, the third message comprises a UEInformationResponse message.

As one dependent embodiment of the above sub-embodiment, the third message is the UEInformationResponse message.

As one dependent embodiment of the above sub-embodiment, the third message comprises one RLF-Report, and the one RLF-Report comprises the first information block.

As one dependent embodiment of the above sub-embodiment, the third message comprises one RLF-Report-r16, and the one RLF-Report-r16 comprises the first information block.

As one dependent embodiment of the above sub-embodiment, the third message comprises one connEstFailReport, and the one connEstFailReport comprises the first information block.

As one dependent embodiment of the above sub-embodiment, the third message comprises one connEstFailReport-r16, and the one connEstFailReport-r16 comprises the first information block.

As one dependent embodiment of the above sub-embodiment, the third message comprises one connEstFailReportList, and the one connEstFailReportList indicates the first information block.

As one dependent embodiment of the above sub-embodiment, the third message comprises one connEstFailReportList-r17, and the one connEstFailReportList-r17 indicates the first information block.

As one embodiment, the dashed box F5.1 does not exist.

### Embodiment 6

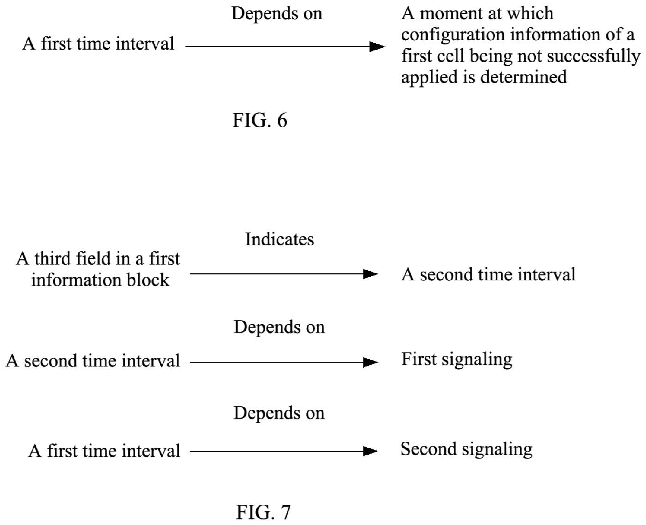

Embodiment 6 illustrates a schematic diagram illustrating that a first time interval depends on a moment at which configuration information of a first cell being not successfully applied is determined according to one embodiment of the present application, as shown in FIG. 6.

In Embodiment 6, the first time interval depends on the moment at which the configuration information of the first cell being not successfully applied is determined.

As one embodiment, a phrase that the first time interval depends on the moment at which the configuration information of the first cell being not applied is determined refers to: an ending moment of the first time interval depends on the moment at which the configuration information of the first cell being not applied is determined.

As one embodiment, a starting moment of the first time interval depends on second signaling, and the ending moment of the first time interval depends on the moment at which the configuration information of the first cell being not successfully applied is determined.

As one embodiment, the first time interval is a time from a moment at which the second signaling is sent to the moment at which the configuration information of the first cell being not successfully applied is determined.

As one embodiment, the first time interval is a time from a moment at which content of the second signaling is determined to the moment at which the configuration information of the first cell being not successfully applied is determined.

As one embodiment, the starting moment of the first time interval depends on first signaling, and the ending moment of the first time interval depends on the moment at which the configuration information of the first cell being not successfully applied is determined.

As one embodiment, the first time interval is a time from a moment at which the first signaling is received to the moment at which the configuration information of the first cell being not successfully applied is determined.

As one embodiment, the first time interval is a time from a moment at which the first signaling is executed to the moment at which the configuration information of the first cell being not successfully applied is determined.

As one embodiment, the first time interval is a time from a moment at which configuration of the first signaling is applied to the moment at which the configuration information of the first cell being not successfully applied is determined.

As one embodiment, the first time interval is a time from a moment at which the configuration information of the first cell is applied to the moment at which the configuration information of the first cell being not successfully applied is determined.

As one embodiment, a behavior that the configuration information of the first cell is applied refers to: after receiving the first signaling, a first node reports from a MAC layer to an RRC layer, and executes an action of handover to the first cell.

As one embodiment, the behavior that the configuration information of the first cell is applied refers to: after receiving the first signaling, the first node reports from the MAC layer to the RRC layer, and executes an action of connection to the first cell.

As one embodiment, the behavior that the configuration information of the first cell is applied refers to: after receiving the first signaling, the first node reports from the MAC layer to the RRC layer, and executes an action of transition to the first cell.

As one embodiment, the behavior that the configuration information of the first cell is applied refers to: the first node initiates a random access procedure to the first cell.

As one sub-embodiment of the above embodiment, initiating random access to the first cell refers to: the random access procedure on the first cell is initiated.

As one sub-embodiment of the above embodiment, initiating the random access to the first cell refers to: the random access procedure on the first cell is triggered.

As one sub-embodiment of the above embodiment, initiating the random access to the first cell refers to: sending a Preamble to the first cell.

As one sub-embodiment of the above embodiment, a phrase of initiating the random access to the first cell refers to: sending an MSGI to the first cell.

As one sub-embodiment of the above embodiment, the phrase of initiating the random access to the first cell refers to: sending an MSGA to the first cell.

As one embodiment, the configuration information of the first cell being not successfully applied is determined, which refers to: a handover failure of the first node to the first cell.

As one embodiment, the configuration information of the first cell being not successfully applied is determined, which refers to: a transition failure of the first node to the first cell.

As one embodiment, the configuration information of the first cell being not successfully applied is determined, which refers to: a connection failure of the first node to the first cell.

As one embodiment, the configuration information of the first cell being not successfully applied is determined, which refers to: a failure of the first node to initiate the random access procedure on the first cell.

### Embodiment 7

Embodiment 7 illustrates a schematic diagram illustrating that a second time interval depends on first signaling and a first time interval depends on second signaling according to one embodiment of the present application, as shown in FIG. 7.

In Embodiment 7, a third field in a first information block is set, the third field in the first information block indicates the second time interval, and the second time interval depends on the first signaling; and the first time interval depends on the second signaling.

As one embodiment, the first time interval depends on the second signaling; and the second time interval depends on the first signaling and the second signaling.

As one embodiment, the first time interval depends on the second signaling, and the first time interval depends on a moment at which configuration information of a first cell being not successfully applied is determined; and the second time interval depends on the first signaling.

As one embodiment, the first time interval depends on the second signaling, and the first time interval depends on the moment at which the configuration information of the first cell being not successfully applied is determined; and the second time interval depends on the second signaling and the first signaling.

As one embodiment, a phrase that the second time interval depends on the first signaling refers to: an ending moment of the second time interval depends on the first signaling.

As one embodiment, the phrase that the second time interval depends on the first signaling refers to: a starting moment of the second time interval depends on the first signaling.

As one embodiment, a phrase that the first time interval depends on the second signaling refers to: an ending moment of the first time interval depends on the second signaling.

As one embodiment, the phrase that the first time interval depends on the second signaling refers to: the ending moment of the first time interval depends on the second signaling.

As one embodiment, the first time interval depends on the second signaling, and the first time interval does not depend on the first signaling.

As one embodiment, the first time interval depends on the second signaling, and the first time interval depends on the first signaling.

As one embodiment, a starting moment of the first time interval depends on the second signaling, and the ending moment of the first time interval depends on the first signaling.

As one embodiment, the starting moment of the first time interval depends on the second signaling, and the ending moment of the first time interval depends on the moment at which the configuration information of the first cell being not successfully applied is determined.

As one embodiment, the first time interval is an elapsed time since the second signaling was sent.

As one embodiment, the third field is not a second field.

As one embodiment, the third field and the second field belong to the same field.

As one embodiment, the third field comprises the second time interval.

As one embodiment, the third field comprises only the second time interval.

As one embodiment, the third field comprises an index related to an indication of the second time interval.

As one embodiment, a name of the third field comprises time.

As one embodiment, the third field belongs to an rlf-report.

As one embodiment, the third field belongs to timeSinceFailure-r18.

As one embodiment, the third field belongs to timeSinceFailure-r19.

As one embodiment, the third field belongs to timeConnFailure-r18.

As one embodiment, the third field belongs to timeConnFailure-r19.

As one embodiment, the third field belongs to timeSinceLTM-Reconfig-r18.

As one embodiment, the third field belongs to timeSinceLTM-Reconfig-r19.

As one embodiment, the third field is timeConnLTM-Failure-r18.

As one embodiment, the third field is timeConnLTM-Failure-r19.

As one embodiment, the third field is timeSinceFailure-r18.

As one embodiment, the third field is timeSinceFailure-r19.

As one embodiment, the third field is timeConnFailure-r18.

As one embodiment, the third field is timeConnFailure-r19.

As one embodiment, the third field is timeSinceLTM-Reconfig-r18.

As one embodiment, the third field is timeSinceLTM-Reconfig-r19.

As one embodiment, the third field is timeConnLTM-Failure-r18.

As one embodiment, the third field is timeConnLTM-Failure-r19.

As one embodiment, a phrase that the third field in the first information block indicates the second time interval refers to: the third field in the first information block is set to the second time interval.

As one embodiment, the phrase that the third field in the first information block indicates the second time interval refers to: the third field in the first information block indicates whether the second time interval exceeds a second value, and the second value is a maximum candidate value of the third field in the first information block.

As one sub-embodiment of the above embodiment, the second value is a first value.

As one sub-embodiment of the above embodiment, the second value is not the first value.

As one embodiment, the phrase that the third field in the first information block indicates the second time interval refers to: when the second time interval does not exceed the second value, the third field in the first information block is set to the second time interval; and when the second time interval exceeds the second value, the third field in the first information block is set to the second value.

As one sub-embodiment of the above embodiment, the third field in the first information block is set to the second time interval, and the second time interval does not exceed the second value.

As one sub-embodiment of the above embodiment, the third field in the first information block is set to the second value, and the second time interval exceeds the second value.

As one embodiment, the second time interval depends on the first signaling, and the second time interval depends on the second signaling.

As one embodiment, the second time interval depends on the first signaling, and the second time interval does not depend on the second signaling.

As one embodiment, a starting moment of the second time interval depends on the first signaling.

As one sub-embodiment of the above embodiment, the starting moment of the second time interval depends on a moment at which the first signaling is received.

As one sub-embodiment of the above embodiment, the starting moment of the second time interval is the moment at which the first signaling is received.

As one sub-embodiment of the above embodiment, the starting moment of the second time interval depends on a moment at which the first signaling is executed.

As one sub-embodiment of the above embodiment, the starting moment of the second time interval is the moment at which the first signaling is executed.

As one embodiment, the ending moment of the second time interval depends on the first signaling.

As one sub-embodiment of the above embodiment, the ending moment of the second time interval depends on the moment at which the first signaling is received.

As one sub-embodiment of the above embodiment, the ending moment of the second time interval is the moment at which the first signaling is received.

As one sub-embodiment of the above embodiment, the ending moment of the second time interval depends on the moment at which the first signaling is executed.

As one sub-embodiment of the above embodiment, the ending moment of the second time interval is the moment at which the first signaling is executed.

As one embodiment, the second time interval is the elapsed time since the moment at which the first signaling is received.

As one embodiment, the second time interval is the elapsed time since the moment at which the first signaling is executed.

As one embodiment, the second time interval is the elapsed time until the moment at which the first signaling is received.

As one embodiment, the second time interval is the elapsed time until the moment at which the first signaling is executed.

As one embodiment, the moment at which the first signaling is received refers to: a moment at which a first node receives the first signaling at a physical layer.

As one embodiment, the moment at which the first signaling is received refers to: a moment at which the first signaling is delivered to a MAC layer.

As one embodiment, the moment at which the first signaling is received refers to: a moment at which the first node receives a MAC CE.

As one embodiment, the moment at which the first signaling is received refers to: a moment at which the first signaling is delivered to a higher layer.

As one embodiment, the moment at which the first signaling is received refers to: a moment at which the first node acquires a corresponding instruction according to the first signaling.

As one embodiment, the moment at which the first signaling is received refers to: a moment at which the corresponding instruction in the first signaling is received.

As one embodiment, the moment at which the first signaling is executed refers to: a moment at which the first node executes the corresponding instruction.

As one embodiment, the moment at which the first signaling is executed refers to: a moment at which the first node prepares a corresponding behavior according to the corresponding instruction.

As one embodiment, the moment at which the first signaling is executed refers to: a moment at which the first node generates a corresponding behavior according to the corresponding instruction.

As one embodiment, the moment at which the first signaling is executed refers to: a moment at which the first signaling starts to be executed.

As one embodiment, the moment at which the first signaling is executed refers to: a moment at which one field in the first signaling is executed.

As one embodiment, the moment at which the first signaling is executed refers to: a moment at which one field in the first signaling has been executed.

As one embodiment, the moment at which the first signaling is executed refers to: a moment at which one field in the first signaling starts to be executed.

As one embodiment, the moment at which the first signaling is executed refers to: a moment at which an RRC sub-layer of the first node receives one indication; and in response to the first signaling being received, the first node sends the one indication to the RRC sub-layer of the first node.

As one embodiment, the moment at which the first signaling is executed refers to: a moment at which, in response to the first signaling being received, the first node sends one indication to the RRC sub-layer of the first node.

As one sub-embodiment of the above embodiment, the corresponding behavior refers to: handover.

As one sub-embodiment of the above embodiment, the corresponding behavior refers to: connection.

As one sub-embodiment of the above embodiment, the corresponding behavior refers to: transition.

As one sub-embodiment of the above embodiment, the corresponding behavior refers to: re-establishment.

As one embodiment, the starting moment of the second time interval depends on the second signaling, and the ending moment of the second time interval depends on the first signaling.

As one sub-embodiment of the above embodiment, a phrase that the starting moment of the second time interval depends on the second signaling refers to: the starting moment of the second time interval depends on a moment at which the second signaling is sent.

As one sub-embodiment of the above embodiment, the phrase that the starting moment of the second time interval depends on the second signaling refers to: the starting moment of the second time interval depends on a moment at which content of the second signaling is determined.

As one sub-embodiment of the above embodiment, the phrase that the starting moment of the second time interval depends on the second signaling refers to: the starting moment of the second time interval depends on a moment at which content of the second signaling is reported to an RRC layer.

As one embodiment, the second time interval is a time from the moment at which the second signaling is sent to the moment at which the first signaling is received.

As one embodiment, the second time interval is a time from the moment at which the second signaling is sent to the moment at which the first signaling is executed.

As one embodiment, the second time interval is a time from the moment at which the content of the second signaling is determined to the moment at which the first signaling is executed.

As one embodiment, the second time interval comprises a positive integer of milliseconds.

As one embodiment, the second time interval comprises a positive integer of seconds.

### Embodiment 8

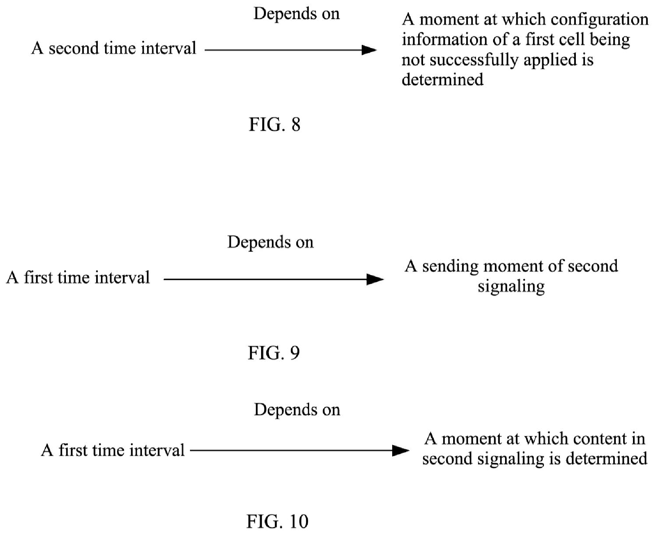

Embodiment 8 illustrates a schematic diagram illustrating that a second time interval depends on a moment at which configuration information of a first cell being not successfully applied is determined according to one embodiment of the present application, as shown in FIG. 8.

In Embodiment 8, a third field in a first information block is set, the third field in the first information block indicates the second time interval, and the second time interval depends on first signaling; a first time interval depends on second signaling; and the second time interval depends on the moment at which the configuration information of the first cell being not successfully applied is determined.

As one embodiment, the first time interval depends on the second signaling and the first signaling; and the second time interval depends on the first signaling, and the second time interval depends on the moment at which the configuration information of the first cell being not successfully applied is determined.

As one embodiment, the first time interval depends on the second signaling, and the first time interval depends on the moment at which the configuration information of the first cell being not successfully applied is determined; and the second time interval depends on the first signaling, and the second time interval depends on the moment at which the configuration information of the first cell being not successfully applied is determined.

As one embodiment, the first time interval depends on the second signaling, and the second time interval depends on the moment at which the configuration information of the first cell being not successfully applied is determined.

As one sub-embodiment of the above embodiment, a starting moment of the first time interval depends on the second signaling, and an ending moment of the second time interval depends on the moment at which the configuration information of the first cell being not successfully applied is determined.

As one sub-embodiment of the above embodiment, the starting moment of the first time interval depends on the second signaling, and a starting moment of the second time interval depends on the moment at which the configuration information of the first cell being not successfully applied is determined.

As one sub-embodiment of the above embodiment, an ending moment of the first time interval depends on the second signaling, and the ending moment of the second time interval depends on the moment at which the configuration information of the first cell being not successfully applied is determined.

As one sub-embodiment of the above embodiment, the ending moment of the first time interval depends on the second signaling, and the starting moment of the second time interval depends on the moment at which the configuration information of the first cell being not successfully applied is determined.

As one embodiment, the starting moment of the second time interval depends on the second signaling, and the ending moment of the second time interval depends on the moment at which the configuration information of the first cell being not successfully applied is determined.

As one sub-embodiment of the above embodiment, the second time interval is a time from a moment at which the second signaling is sent to the moment at which the configuration information of the first cell being not successfully applied is determined.

As one sub-embodiment of the above embodiment, the second time interval is a time from a moment at which content of the second signaling is determined to the moment at which the configuration information of the first cell being not successfully applied is determined.

As one embodiment, the first time interval depends on the first signaling, and the second time interval depends on the moment at which the configuration information of the first cell being not successfully applied is determined.

As one sub-embodiment of the above embodiment, the starting moment of the first time interval depends on the first signaling, and the ending moment of the second time interval depends on the moment at which the configuration information of the first cell being not successfully applied is determined.

As one sub-embodiment of the above embodiment, the starting moment of the first time interval depends on the first signaling, and the starting moment of the second time interval depends on the moment at which the configuration information of the first cell being not successfully applied is determined.

As one sub-embodiment of the above embodiment, the ending moment of the first time interval depends on the first signaling, and the ending moment of the second time interval depends on the moment at which the configuration information of the first cell being not successfully applied is determined.

As one sub-embodiment of the above embodiment, the ending moment of the first time interval depends on the first signaling, and the starting moment of the second time interval depends on the moment at which the configuration information of the first cell being not successfully applied is determined.

As one embodiment, the starting moment of the second time interval depends on the first signaling, and the ending moment of the second time interval depends on the moment at which the configuration information of the first cell being not successfully applied is determined.

As one sub-embodiment of the above embodiment, the second time interval is a time from a moment at which the first signaling is received to the moment at which the configuration information of the first cell being not successfully applied is determined.

As one sub-embodiment of the above embodiment, the second time interval is a time from a moment at which the first signaling is executed to the moment at which the configuration information of the first cell being not successfully applied is determined.

As one embodiment, the starting moment of the second time interval depends on the moment at which the configuration information of the first cell being not successfully applied is determined.

As one embodiment, the ending moment of the second time interval depends on the moment at which the configuration information of the first cell being not successfully applied is determined.

As one embodiment, the second time interval is an elapsed time since the moment at which the configuration information of the first cell being not successfully applied is determined.

As one embodiment, the second time interval is the elapsed time until the moment at which the configuration information of the first cell being not successfully applied is determined.

As one sub-embodiment of the above embodiment, a phrase of the moment at which the configuration information of the first cell being not successfully applied is determined refers to: a moment of a handover failure.

As one sub-embodiment of the above embodiment, the phrase of the moment at which the configuration information of the first cell being not successfully applied is determined refers to: a moment of a synchronization failure.

As one sub-embodiment of the above embodiment, the phrase of the moment at which the configuration information of the first cell being not successfully applied is determined refers to: a moment at which a radio link failure occurs.

As one sub-embodiment of the above embodiment, the phrase of the moment at which the configuration information of the first cell being not successfully applied is determined refers to: the moment at which the radio link failure is monitored.

As one sub-embodiment of the above embodiment, the phrase of the moment at which the configuration information of the first cell being not successfully applied is determined refers to: the moment at which the radio link failure is reported.

### Embodiment 9

Embodiment 9 illustrates a schematic diagram illustrating that a first time interval depends on a sending moment of second signaling according to one embodiment of the present application, as shown in FIG. 9.

In Embodiment 9, the first time interval depends on the sending moment of the second signaling.

As one embodiment, an ending moment of the first time interval depends on the sending moment of the second signaling.

As one embodiment, the ending moment of the first time interval is the sending moment of the second signaling.

As one embodiment, the first time interval is a time from a receiving moment of a first message to the sending moment of the second signaling.

As one embodiment, the receiving moment of the first message refers to: a moment at which the first message is received at a physical layer.

As one embodiment, the receiving moment of the first message refers to: a moment at which the first message is delivered to a higher layer.

As one embodiment, the receiving moment of the first message refers to: a moment at which configuration in the first message is applied in an RRC layer.

As one embodiment, the receiving moment of the first message refers to: a moment at which the configuration in the first message is completed.

As one embodiment, the sending moment of the second signaling refers to: a moment at which the second signaling is sent at the physical layer.

As one embodiment, the sending moment of the second signaling refers to: a moment at which the second signaling is mapped to a physical layer resource.

As one embodiment, the sending moment of the second signaling refers to: a moment at which the second signaling is delivered to a lower layer.

As one embodiment, the sending moment of the second signaling refers to: a moment at which the second signaling is sent at an RRC sub-layer.

As one embodiment, the sending moment of the second signaling refers to: a moment at which the second signaling is sent at a MAC sub-layer.

As one embodiment, in response to the second signaling being sent at the physical layer, one indication is sent to a higher layer; the one indication is received at the higher layer; and the sending moment of the second signaling refers to a moment at which the one indication is received at the higher layer.

As one embodiment, a starting moment of the first time interval depends on the sending moment of the second signaling.

As one embodiment, the starting moment of the first time interval is the sending moment of the second signaling.

As one embodiment, the first time interval is an elapsed time since the moment at which the second signaling is sent.

As one embodiment, the first time interval is a time from the moment at which the second signaling is sent to a moment at which the first signaling is received.

As one embodiment, the first time interval is a time from the moment at which the second signaling is sent to a moment at which the first signaling is executed.

As one embodiment, the first time interval is a time from the moment at which the second signaling is sent to a moment at which configuration information of a first cell being not successfully applied is determined.

As one embodiment, a phrase that the first time interval depends on the sending moment of the second signaling refers to: when the second signaling is not sent, the first time interval does not exist.

As one embodiment, the phrase that the first time interval depends on the sending moment of the second signaling refers to: when the second signaling is not sent, the first time interval indicates an initial value.

As one embodiment, the phrase that the first time interval depends on the sending moment of the second signaling refers to: when the second signaling is not sent, the first time interval indicates another time period; when the second signaling is sent, the first time interval is initialized; and a starting moment of the time interval depends on the sending moment of the second signaling.

### Embodiment 10

Embodiment 10 illustrates a schematic diagram illustrating that a first time interval depends on a moment at which content in second signaling is determined according to one embodiment of the present application, as shown in FIG. 10.

As one embodiment, an ending moment of the first time interval depends on the moment at which the content in the second signaling is determined.

As one embodiment, the ending moment of the first time interval is the moment at which the content in the second signaling is determined.

As one embodiment, the moment at which the content in the second signaling is determined refers to: a moment at which the content in the second signaling is set.

As one embodiment, the moment at which the content in the second signaling is determined refers to: a moment at which the content in the second signaling is acquired.

As one embodiment, the moment at which the content in the second signaling is determined refers to: a moment at which the content in the second signaling is acquired at a physical layer.

As one embodiment, the moment at which the content in the second signaling is determined refers to: a moment at which the content in the second signaling is reported to a higher layer after being acquired at the physical layer.

As one embodiment, the moment at which the content in the second signaling is determined refers to: a moment at which the content in the second signaling is acquired by a higher layer above the physical layer.

As one embodiment, the first time interval is an elapsed time until the moment at which the content in the second signaling is determined.

As one embodiment, a starting moment of the first time interval depends on the moment at which the content in the second signaling is determined.

As one embodiment, the starting moment of the first time interval is the moment at which the content in the second signaling is determined.

As one embodiment, the first time interval is the elapsed time since the moment at which the content in the second signaling is determined.

As one embodiment, the first time interval depends on the moment at which the content in the second signaling is determined, and the first time interval depends on first signaling.

As one sub-embodiment of the above embodiment, a phrase that the first time interval depends on the moment at which the content in the second signaling is determined, and the first time interval depends on first signaling refers to: the starting moment of the first time interval depends on the moment at which the content in the second signaling is determined, and the ending moment of the first time interval depends on a moment at which the first signaling is received.

As one sub-embodiment of the above embodiment, the phrase that the first time interval depends on the moment at which the content in the second signaling is determined, and the first time interval depends on first signaling refers to: the starting moment of the first time interval depends on the moment at which the content in the second signaling is determined, and the ending moment of the first time interval depends on a moment at which the first signaling is executed.

As one sub-embodiment of the above embodiment, the phrase that the first time interval depends on the moment at which the content in the second signaling is determined, and the first time interval depends on the first signaling refers to: the starting moment of the first time interval depends on the moment at which the content in the second signaling is determined, and the ending moment of the first time interval depends on a relevant indication in the first signaling.

### Embodiment 11

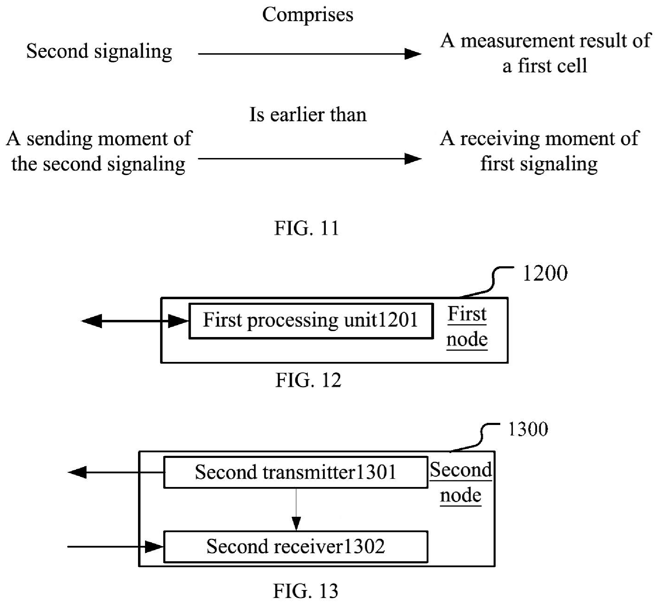

Embodiment 11 illustrates a schematic diagram illustrating that a sending moment of second signaling is earlier than a receiving moment of first signaling according to one embodiment of the present application, as shown in FIG. 11.

As one embodiment, the second signaling comprises a measurement result of at least one cell.

As one embodiment, the second signaling comprises a measurement result of only a first cell.

As one embodiment, the second signaling is periodically triggered.

As one embodiment, the second signaling is event-triggered.

As one embodiment, the second signaling is periodically sent.

As one embodiment, the second signaling is aperiodically sent.

As one embodiment, the second signaling comprises one measurement report.

As one embodiment, the second signaling is one measurement report.

As one embodiment, the second signaling is a last measurement report sent before the first signaling is received.

As one embodiment, the second signaling is the last measurement report sent before the first signaling is executed.

As one embodiment, the second signaling is the last measurement report sent before starting applying configuration information of the first cell.

As one embodiment, the measurement report is an L1 measurement report.

As one embodiment, the measurement report is an L3 measurement report.

As one embodiment, the measurement report is any one of the L1 measurement report and the L3 measurement report.

As one embodiment, the measurement report is sent through UCI.

As one embodiment, the measurement report is sent through a PUSCH.

As one embodiment, the measurement report is sent through an RRC message.

As one embodiment, the measurement report is sent through a MAC CE.

As one embodiment, the measurement report is sent through an SRB1.

As one embodiment, the measurement report is sent through an SRB3.

As one embodiment, the measurement result comprises one MeasResultServMO field.

As one embodiment, the measurement result comprises one measResultNeighCells field.

As one embodiment, the measurement result comprises one MeasResultNR field.

As one embodiment, the measurement result comprises an identity of at least the first cell.

As one embodiment, the measurement result comprises at least one RSRP result.

As one embodiment, the measurement result comprises at least one RSRQ result.

As one embodiment, the measurement result comprises at least one SINR result.

As one embodiment, the sending moment of the second signaling being earlier than the receiving moment of the first signaling refers to: the sending moment of the second signaling is not later than the receiving moment of the first signaling.

As one embodiment, the first signaling is one handover command.

As one embodiment, the first signaling is one transition command.

As one embodiment, the first signaling is one re-establishment command.

As one embodiment, the first signaling is one RRC layer message.

As one embodiment, the first signaling is one RRC sub-layer message.

As one embodiment, the first signaling is a message of a lower layer than one RRC sub-layer.

As one embodiment, the first signaling is one MAC CE.

As one embodiment, the first signaling is one piece of DCI.

As one embodiment, the first signaling is transmitted on a PDSCH.

As one embodiment, the first signaling is transmitted on a PDCCH.

### Embodiment 12

Embodiment 12 illustrates a structural block diagram of a processing apparatus used in a first node according to one embodiment of the present application, as shown in FIG. 12. In FIG. 12, a processing apparatus 1200 in the first node comprises a first processing unit 1201.

The first processing unit 1201 receives a first message, wherein the first message comprises configuration information of a first cell; sends second signaling; receives first signaling, wherein the first signaling is signaling of a protocol layer under an RRC sub-layer, and the first signaling indicates the first cell; in response to the first signaling being received, applies the configuration information of the first cell; in response to the configuration information of the first cell being not successfully applied, sets a first information block in a first UE variable, wherein the first information block is used for indicating information about a wireless connection failure.

In Embodiment 12, a first field in the first information block is set, and the first field in the first information block indicates an identity of the first cell; and a second field in the first information block is set, the second field in the first information block indicates a first time interval, and the first time interval depends on at least one of the second signaling or the first signaling.

As one embodiment, the first time interval depends on a moment at which the configuration information of the first cell being not successfully applied is determined.

As one embodiment, a third field in the first information block is set, the third field in the first information block indicates a second time interval, and the second time interval depends on the first signaling; and the first time interval depends on the second signaling.

As one embodiment, the second time interval depends on the moment at which the configuration information of the first cell being not successfully applied is determined.

As one embodiment, the first time interval depends on a sending moment of the second signaling.

As one embodiment, the first time interval depends on a moment at which content in the second signaling is determined.

As one embodiment, the second signaling comprises a measurement result of the first cell; the second signaling is the signaling of the protocol layer under the RRC sub-layer; and the sending moment of the second signaling is earlier than a receiving moment of the first signaling.

As one embodiment, the first processing unit 1201 receives a second message, wherein the second message comprises a first request indication; and in response to the second message being received, sends a third message, wherein the third message comprises the first information block in the first UE variable; and the third message comprises the first information block in the first UE variable depending on the first request indication.

As one embodiment, the first processing unit 1201 comprises a first receiver and a first transmitter.

As one embodiment, the first processing unit 1201 comprises the first transmitter.

As one embodiment, the first processing unit 1201 comprises the first receiver.

As one embodiment, the first receiver comprises at least one of an antenna 452 or a receiving device 454 or a multi-antenna receiving processor 458 or a receiving processor 456 or a controller/processor 459 or a memory 460 or a data source 467 in FIG. 4 of the present application.

As one embodiment, the first receiver comprises at least the antenna 452 and the receiving device 454 in FIG. 4 of the present application.

As one embodiment, the first transmitter comprises at least one of the antenna 452 or the transmitting device 454 or a multi-antenna transmitting processor 457 or a transmitting processor 468 or the controller/processor 459 or the memory 460 or the data source 467 in FIG. 4 of the present application.

As one embodiment, the first transmitter comprises at least the antenna 452 and the transmitting device 454 in FIG. 4 of the present application.

As one embodiment, the first information block in the first UE variable is set by the first receiver.

As one embodiment, the first information block in the first UE variable is set by the first transmitter.

As one embodiment, the first information block in the first UE variable is set by the memory 460 in the first receiver.

As one embodiment, the first information block in the first UE variable is set by the memory 460 in the first transmitter.

As one embodiment, the first information block in the first UE variable is set by the controller/processor 459 in the first receiver.

As one embodiment, the first information block in the first UE variable is set by the controller/processor 459 in the first transmitter.

### Embodiment 13

Embodiment 13 illustrates a structural block diagram of a processing apparatus used in a second node according to one embodiment of the present application, as shown in FIG. 13. In FIG. 13, a processing apparatus 1300 in the second node comprises a second transmitter 1301 and a second receiver 1302.

The second transmitter 1301 sends a second message, wherein the second message comprises a first request indication; and
the second receiver 1302, in response to the second message being sent, receives a third message.

In Embodiment 13, the third message comprises a first information block in a first UE variable; the third message comprises the first information block in the first UE variable depending on the first request indication; a recipient of the second message receives a first message, wherein the first message comprises configuration information of a first cell; the recipient of the second message sends second signaling; the recipient of the second message receives first signaling, wherein the first signaling is signaling of a protocol layer under an RRC sub-layer, and the first signaling indicates the first cell; in response to the first signaling being received, the recipient of the second message applies the configuration information of the first cell;in response to the configuration information of the first cell being not successfully applied, the recipient of the second message sets the first information block in the first UE variable, wherein the first information block is used for indicating information about a wireless connection failure;a first field in the first information block is set, and the first field in the first information block indicates an identity of the first cell; a second field in the first information block is set, the second field in the first information block indicates a first time interval, and the first time interval depends on at least one of the second signaling or the first signaling.

As one embodiment, the first time interval depends on a moment at which the configuration information of the first cell being not successfully applied is determined.

As one embodiment, a third field in the first information block is set, the third field in the first information block indicates a second time interval, and the second time interval depends on the first signaling; and the first time interval depends on the second signaling.

As one embodiment, the second time interval depends on the moment at which the configuration information of the first cell being not successfully applied is determined.

As one embodiment, the first time interval depends on a sending moment of the second signaling.

As one embodiment, the first time interval depends on a moment at which content in the second signaling is determined.

As one embodiment, the second signaling comprises a measurement result of the first cell; the second signaling is the signaling of the protocol layer under the RRC sub-layer; and the sending moment of the second signaling is earlier than a receiving moment of the first signaling.

As one embodiment, the second transmitter 1301 comprises at least one of an antenna 420 or a transmitting device 418 or a multi-antenna transmitting processor 471 or a transmitting processor 416 or a controller/processor 475 or a memory 476 in FIG. 4 of the present application.

As one embodiment, the second transmitter 1301 comprises at least the antenna 420 and the transmitting device 418 in FIG. 4 of the present application.

As one embodiment, the second receiver 1302 comprises at least one of the antenna 420 or a receiving device 418 or a multi-antenna receiving processor 472 or a receiving processor 470 or the controller/processor 475 or the memory 476 in FIG. 4 of the present application.

As one embodiment, the second receiver 1302 comprises at least the antenna 420 and the receiving device 418 in FIG. 4 of the present application.

Those of ordinary skill in the art may understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module. The present application is not limited to any specific form of software and hardware combination. The user equipment, terminals and UE in the present application include but are not limited to drones, communication modules on the drones, remote-controlled airplanes, aircrafts, small airplanes, mobile phones, tablet computers, notebook computers, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers, and other wireless communication devices. The base station or system device in the present application includes but is not limited to macro cellular base stations, micro cellular base stations, Femtocells, relay base stations, gNBs (NR Nodes B), TRPs (Transmitter Receiver Points), and other wireless communication devices.

The above are only preferred embodiments of the present application and are not intended to limit the scope of protection of the present application. Any modifications, equivalent substitutions, improvements and the like made within the spirit and principles of the present application shall be comprised within the scope of protection of the present application.

## Claims

1. A first node for wireless communication, comprising:
a first processing unit receiving a first message, wherein the first message comprises configuration information of a first cell; sending second signaling; receiving first signaling, wherein the first signaling is signaling of a protocol layer under an RRC sub-layer, and the first signaling indicates the first cell; in response to the first signaling being received, applying the configuration information of the first cell; in response to the configuration information of the first cell being not successfully applied, setting a first information block in a first UE variable, wherein the first information block is used for indicating information about a wireless connection failure,
wherein a first field in the first information block is set, and the first field in the first information block indicates an identity of the first cell; a second field in the first information block is set, the second field in the first information block indicates a first time interval, and the first time interval depends on at least one of the second signaling or the first signaling.

2. The first node according to claim 1, wherein the first time interval depends on a moment at which the configuration information of the first cell being not successfully applied is determined.

3. The first node according to claim 1 or 2, wherein a third field in the first information block is set, the third field in the first information block indicates a second time interval, and the second time interval depends on the first signaling; the first time interval depends on the second signaling.

4. The first node according to claim 3, wherein the second time interval depends on a moment at which the configuration information of the first cell being not successfully applied is determined.

5. The first node according to any one of claims 1 to 4, wherein the first time interval depends on a sending moment of the second signaling.

6. The first node according to any one of claims 1 to 4, wherein the first time interval depends on a moment at which content in the second signaling is determined.

7. The first node according to any one of claims 1 to 6, wherein the second signaling comprises a measurement result of the first cell; the second signaling is the signaling of the protocol layer under the RRC sub-layer; the sending moment of the second signaling is earlier than a receiving moment of the first signaling.

8. The first node according to any one of claims 1 to 7, comprising:
the first processing unit receiving a second message, wherein the second message comprises a first request indication; in response to the second message being received, sending a third message,
wherein the third message comprises the first information block in the first UE variable; the third message comprises the first information block in the first UE variable depending on the first request indication.

9. A second node for wireless communication, comprising:
a second transmitter sending a second message, wherein the second message comprises a first request indication;
a second receiver, in response to the second message being sent, receiving a third message,
wherein the third message comprises a first information block in a first UE variable; the third message comprises the first information block in the first UE variable depending on the first request indication; a recipient of the second message receives a first message, wherein the first message comprises configuration information of a first cell; the recipient of the second message sends second signaling; the recipient of the second message receives first signaling, wherein the first signaling is signaling of a protocol layer under an RRC sub-layer, and the first signaling indicates the first cell; in response to the first signaling being received, the recipient of the second message applies the configuration information of the first cell; in response to the configuration information of the first cell being not successfully applied, the recipient of the second message sets the first information block in the first UE variable, wherein the first information block is used for indicating information about a wireless connection failure; a first field in the first information block is set, and the first field in the first information block indicates an identity of the first cell; a second field in the first information block is set, the second field in the first information block indicates a first time interval, and the first time interval depends on at least one of the second signaling or the first signaling.

10. A method used in a first node for wireless communication, comprising:
receiving a first message, wherein the first message comprises configuration information of a first cell; sending second signaling; receiving first signaling, wherein the first signaling is signaling of a protocol layer under an RRC sub-layer, and the first signaling indicates the first cell; in response to the first signaling being received, applying the configuration information of the first cell; in response to the configuration information of the first cell being not successfully applied, setting a first information block in a first UE variable, wherein the first information block is used for indicating information about a wireless connection failure,
wherein a first field in the first information block is set, and the first field in the first information block indicates an identity of the first cell; a second field in the first information block is set, the second field in the first information block indicates a first time interval, and the first time interval depends on at least one of the second signaling or the first signaling.

11. A method used in a second node for wireless communication, comprising:
sending a second message, wherein the second message comprises a first request indication;
in response to the second message being sent, receiving a third message,
wherein the third message comprises a first information block in a first UE variable; the third message comprises the first information block in the first UE variable depending on the first request indication; a recipient of the second message receives a first message, wherein the first message comprises configuration information of a first cell; the recipient of the second message sends second signaling; the recipient of the second message receives first signaling, wherein the first signaling is signaling of a protocol layer under an RRC sub-layer, and the first signaling indicates the first cell; in response to the first signaling being received, the recipient of the second message applies the configuration information of the first cell; in response to the configuration information of the first cell being not successfully applied, the recipient of the second message sets the first information block in the first UE variable, wherein the first information block is used for indicating information about a wireless connection failure; a first field in the first information block is set, and the first field in the first information block indicates an identity of the first cell; a second field in the first information block is set, the second field in the first information block indicates a first time interval, and the first time interval depends on at least one of the second signaling or the first signaling.
